# EUROPEAN PATENT SPECIFICATION

(11) **EP 3 175 575 B1**
(45) Date of publication and mention of the grant of the patent: **10.04.2019**
(21) Application number: 15826300.4
(22) Date of filing: 28.05.2015
(51) Int. Cl.: H04L 9/08, G06F 21/10, H04L 29/06, G06F 21/74

(54) **SECURE CONTENT PACKAGING USING MULTIPLE TRUSTED EXECUTION ENVIRONMENTS**
SICHERES INHALTS-PACKAGING MIT MEHREREN VERTRAULICHEN AUSFÜHRUNGSUMGEBUNGEN
CONDITIONNEMENT DE CONTENU SÉCURISÉ UTILISANT DES ENVIRONNEMENTS MULTIPLES DE CONFIANCE D'EXÉCUTION

(30) Priority: 29.07.2014 US 201414445664
(43) Date of publication of application: 07.06.2017
(73) Proprietor: McAfee, LLC, Santa Clara, CA 95054 (US)
(72) Inventor: POGORELIK, Oleg, 73133 Lapid (IL); NAYSHTUT, Alex, 80700 Gan Yavne (IL); SMITH, Ned M., Beaverton, Oregon 97006 (US); MUTTIK, Igor, Berkhamsted Hertfordshire HP4 3BS (GB); LAPIDOT, Ido, 31015 Haifa (IL)
(74) Representative: Schäflein, Christian Georg
(86) International application number: PCT/US2015/032856
(87) International publication number: WO 2016/018502

(56) References cited:
- EP-A1- 1 134 670
- US-A1- 2003 115 322
- US-A1- 2009 327 739
- US-A1- 2012 297 200
- US-A1- 2014 095 867
- US-A1- 2014 096 182
- US-B1- 8 391 494

## Description

### CROSS-REFERENCE TO RELATED U.S. PATENT APPLICATION

The present application claims priority to U.S. Utility Patent Application Serial No. 14/445,664, entitled "SECURE CONTENT PACKAGING USING MULTIPLE TRUSTED EXECUTION ENVIRONMENTS," which was filed on July 29, 2014.

### BACKGROUND

Modern computing systems support global collaboration and content sharing. Thus, protecting and securing sensitive data has become increasingly important. In particular, current computing systems may use techniques to ensure that content may only be accessed by authorized persons and/or accessed under pre-defined conditions. Content access may be controlled according to one or more organizational information security policy constraints.

Current content security systems include third-party protection engines such as content controls provided by a website provider, as well as heavyweight enterprise rights management (ERM) solutions used by some organizations. Such systems typically do not support customization of security policies by content creators or other end users. For example, ERM solutions may apply enterprise information security classifications. Additionally, existing content security systems may require the use of proprietary websites, enterprise document centers, or other centralized document stores, and may not support enforcing content controls outside of the controllable scope of the system. Further, such systems typically mandate the use of the same toolset for all users and therefore may lack interoperability.

European patent application EP1134670 is further prior-art.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a system for secure content packaging;
FIG. 2 is a simplified block diagram of at least one embodiment of various environments that may be established by the system of FIG. 1;
FIG. 3 is a schematic diagram illustrating at least one embodiment of a secure package that may be generated by the system of FIGS. 1 and 2;
FIGS. 4A and 4B are a simplified flow diagram of at least one embodiment of a method for accessing content of a secure package that may be executed by a destination computing device of the system of FIGS. 1 and 2;
FIG. 5 is a schematic diagram illustrating at least one embodiment of a content access policy that may be established by the system of FIGS. 1 and 2;
FIG. 6 is a simplified flow diagram of at least one embodiment of a method for secure package authoring that may be executed by a source computing device of the system of FIGS. 1 and 2;
FIG. 7 is a simplified flow diagram of at least one embodiment of a method for accessing content of a secure group container that may be executed by the destination computing device of the system of FIGS. 1 and 2;
FIG. 8 is a schematic diagram of at least one embodiment of a secure group container that may be generated by the system of FIGS. 1 and 2;
FIG. 9 is a simplified flow diagram of at least one embodiment of a method for secure group container authoring that may be executed by the source computing device of the system of FIGS. 1 and 2; and
FIG. 10 is a simplified flow diagram of at least one embodiment of a method for key provisioning that may be executed by the destination computing device of the system of FIGS. 1 and 2.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C): (A and B); (A and C); (B and C); or (A, B, and C). Similarly, items listed in the form of "at least one of A, B, or C" can mean (A); (B); (C): (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or ordering s. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

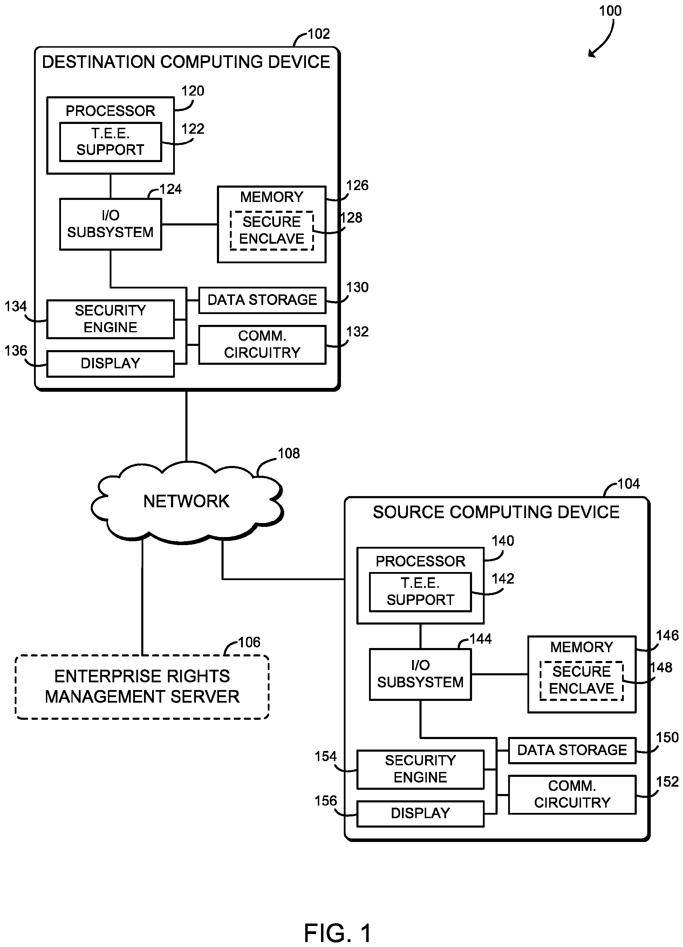

Referring now to FIG. 1, in an illustrative embodiment, a system 100 for secure content packaging includes a destination computing device 102 and a source computing device 104 in communication over a network 108. In use, as described in more detail below, the source computing device 104 authors content and generates a secure package including the content. The secure package includes encrypted content, encryption keys, and access policies, as well as a policy enforcement engine that may be executed by the destination computing device 102. The destination computing device 102 establishes at least two trusted execution environments (TEEs). One of the trusted execution environments evaluates a key access policy to determine whether to release the content encryption key. If the content key is released, another trusted execution environment executes the policy enforcement engine to evaluate a content access policy and determine whether to decrypt the content. In some embodiments, the system 100 may also include an enterprise rights management (ERM) server 106. The ERM server 106 may provide enterprise policy templates, perform user and/or group authentication, and support creating secure group containers for secure packages. Thus, the system 100 may allow the content author to customize or specify the content access policy. Additionally, the content access policy may expose rich policy options based on the current context of the destination computing device 102. Further, the system 100 may allow for widespread document sharing because security policies may be securely enforced by a destination computing device 102 that is outside the control of an organization. Also, because most processing may be performed by the destination computing device 102 and/or the source computing device 104 and not by the ERM server 106, the system 100 may be scalable to large numbers of client devices.

The destination computing device 102 may be embodied as any type of computation or computer device capable of performing the functions described herein, including, without limitation, a computer, a multiprocessor system, a server, a rack-mounted server, a blade server, a laptop computer, a notebook computer, a tablet computer, a mobile computing device, a wearable computing device, a network appliance, a web appliance, a distributed computing system, a processor-based system, and/or a consumer electronic device. As shown in FIG. 1, the destination computing device 102 illustratively includes a processor 120, an input/output subsystem 124, a memory 126, a data storage device 130, and communication circuitry 132. Of course, the destination computing device 102 may include other or additional components, such as those commonly found in a desktop computer (e.g., various input/output devices), in other embodiments. Additionally, in some embodiments, one or more of the illustrative components may be incorporated in, or otherwise form a portion of, another component. For example, the memory 126, or portions thereof, may be incorporated in one or more processors 120 in some embodiments.

The processor 120 may be embodied as any type of processor capable of performing the functions described herein. The processor 120 may be embodied as a single or multi-core processor(s), digital signal processor, microcontroller, or other processor or processing/controlling circuit. The processor 120 includes trusted execution environment (TEE) support 122. The TEE support 122 allows the processor 120 to establish a software execution environment in which executing code may be measured, verified, or otherwise determined to be authentic. Additionally, code and data included in the software TEE may be encrypted or otherwise protected from being accessed by code executing outside of the software TEE. In some embodiments, the TEE support 122 may be embodied as Intel® Software Guard Extensions (SGX) technology. Intel® SGX technology may be embodied as a set of processor instruction extensions that allow the processor 120 to establish one or more secure enclaves in the memory 126, which may be embodied as regions of memory including software that is isolated from other software executed by the processor 120.

The memory 126 may be embodied as any type of volatile or non-volatile memory or data storage capable of performing the functions described herein. In operation, the memory 126 may store various data and software used during operation of the destination computing device 102 such as operating systems, applications, programs, libraries, and drivers. The memory 126 may include one or more software isolation trusted execution environments (TEEs) 128. Each software isolation TEE 128 may be embodied as a protected region of the memory 126. Each software isolation TEE 128 may include code and data that is measured, validated, or otherwise authenticated. Additionally, the contents of the software isolation TEE 128 may be protected from access by software executing outside of the same software isolation TEE 128. The contents of each software isolation TEE 128 may be protected from access and/or tampering using any combination of hardware protection and/or cryptographic protection. For example, each software isolation TEE 128 may be embodied as a secure enclave created and otherwise managed using Intel® SGX technology. In some embodiments, part or all of the software isolation TEE 128 may be stored in a specialized memory structure such as an enclave page cache (EPC).

The memory 126 is communicatively coupled to the processor 120 via the I/O subsystem 124, which may be embodied as circuitry and/or components to facilitate input/output operations with the processor 120, the memory 126, and other components of the destination computing device 102. For example, the I/O subsystem 124 may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 124 may form a portion of a system-on-a-chip (SoC) and be incorporated, along with the processors 120, the memory 126, and other components of the destination computing device 102, on a single integrated circuit chip.

The data storage device 130 may be embodied as any type of device or devices configured for short-term or long-term storage of data such as, for example, memory devices and circuits, memory cards, hard disk drives, solid-state drives, or other data storage devices. The data storage device 130 may be used to temporarily or permanently store securely packaged content. In some embodiments, the data storage device 130 may be used to store the contents of one or more software isolation TEEs 128. When stored by the data storage device 130, the contents of the software isolation TEEs 128 may be encrypted to prevent access by unauthorized software.

The communication circuitry 132 of the destination computing device 102 may be embodied as any communication circuit, device, or collection thereof, capable of enabling communications between the destination computing device 102, the source computing device 104, the enterprise rights management server 106, and/or other remote devices over the network 108. The communication circuitry 132 may be configured to use any one or more communication technology (e.g., wired or wireless communications) and associated protocols (e.g., Ethernet, Bluetooth®, Wi-Fi®, WiMAX, etc.) to effect such communication.

The destination computing device 102 may also include a security engine 134 and a display 136. The security engine 134 may be embodied as any hardware component(s) or circuitry capable of establishing a trusted execution environment (TEE) on the destination computing device 102. In particular, the security engine 134 may support executing code that is independent and secure from other code executed by the destination computing device 102. The security engine 134 may be embodied as a Trusted Platform Module (TPM), a manageability engine, an out-of-band processor, or other security engine device or collection of devices. In some embodiments the security engine 134 may be embodied as a converged security and manageability engine (CSME) incorporated in a system-on-a-chip (SoC) of the destination computing device 102. Further, in some embodiments, the security engine 134 is also capable of communicating using the communication circuitry 132 or a dedicated communication circuit independently of the state of the destination computing device 102 (e.g., independently of the state of the main processor 120), also known as "out-of-band" communication.

The display 136 of the destination computing device 102 may be embodied as any type of display capable of displaying digital information such as a liquid crystal display (LCD), a light emitting diode (LED), a plasma display, a cathode ray tube (CRT), or other type of display device. In some embodiments, the display 136 may support displaying content received over a trusted I/O path such as a Protected Audio/Video Path (PAVP).

The source computing device 104 is configured to generate secure packages including encrypted content. The source computing device 104 may be embodied as any type of computation or computer device capable of performing the functions described herein, including, without limitation, a computer, a multiprocessor system, a server, a rack-mounted server, a blade server, a laptop computer, a notebook computer, a tablet computer, a wearable computing device, a network appliance, a web appliance, a distributed computing system, a processor-based system, and/or a consumer electronic device. Illustratively, the source computing device 104 includes a processor 140 with TEE support 142, an I/O subsystem 144, a memory 146 that may include a software isolation TEE 148, a data storage device 150, communication circuitry 152, a security engine 154, a display 156, and/or other components and devices commonly found in a workstation or similar computing device. Those individual components of the source computing device 104 may be similar to the corresponding components of the destination computing devices 102, the description of which is applicable to the corresponding components of the source computing device 104 and is not repeated herein so as not to obscure the present disclosure. In some embodiments, the source computing device 104 may be embodied as the same type of device as the destination computing device 102.

The enterprise rights management server 106 is configured to provide enterprise policy templates, perform user and/or group authentication, and support creating secure group containers for secure packages. The enterprise rights management server 106 may be embodied as any type of server computing device, or collection of devices, capable of performing the functions described herein. As such, the enterprise rights management server 106 may be embodied as a single server computing device or a collection of servers and associated devices. For example, in some embodiments, the enterprise rights management server 106 may be embodied as a "virtual server" formed from multiple computing devices distributed across the network 108 and operating in a public or private cloud. Accordingly, although the enterprise rights management server 106 is illustrated in FIG. 1 as embodied as a single server computing device, it should be appreciated that the enterprise rights management server 106 may be embodied as multiple devices cooperating together to facilitate the functionality described below.

As discussed in more detail below, the destination computing device 102, the source computing device 104, and the enterprise rights management server 106 may be configured to transmit and receive data with each other and/or other devices of the system 100 over the network 108. The network 108 may be embodied as any number of various wired and/or wireless networks. For example, the network 108 may be embodied as, or otherwise include, a wired or wireless local area network (LAN), a wired or wireless wide area network (WAN), a cellular network, and/or a publicly-accessible, global network such as the Internet. As such, the network 108 may include any number of additional devices, such as additional computers, routers, and switches, to facilitate communications among the devices of the system 100.

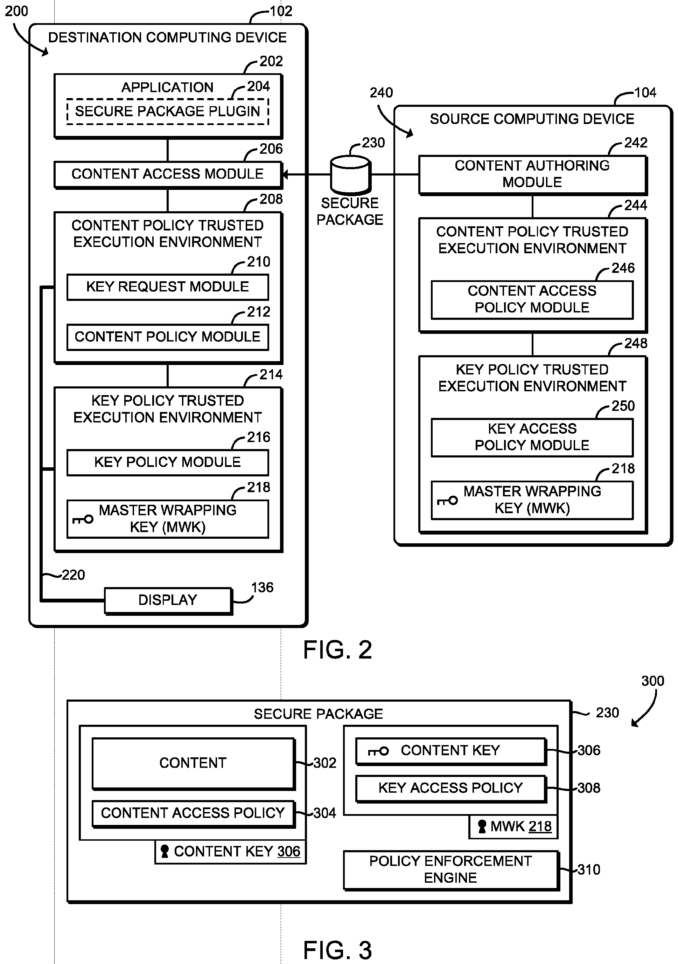

Referring now to FIG. 2, in an illustrative embodiment, the destination computing device 102 establishes an environment 200 during operation. The illustrative environment 200 includes an application 202, a content access module 206, a content policy trusted execution environment (TEE) 208, and a key policy trusted execution environment (TEE) 214. The various modules of the environment 200 may be embodied as hardware, firmware, software, or a combination thereof. For example the various modules, logic, and other components of the environment 200 may form a portion of, or otherwise be established by, the processor 120 or other hardware components of the destination computing device 102.

The application 202 is configured to display, view, playback, edit, or otherwise access protected content. As further described below, the protected content is included in a secure package 230 that may be received from the source computing device 104. In some embodiments, the application 202 may be embodied as a traditional productivity application such as a word processor, spreadsheet application, or email client. Additionally or alternatively, in some embodiments, the application 202 may be embodied as a specialized application for viewing content included in the secure package 230. In some embodiments, the secure package 230 may be processed by a file filter or other subcomponent of the application 202. For example, in some embodiments the application 202 may include one or more secure package plugins 204 to perform those features.

The content access module 206 is configured to receive the secure package 230 from the source computing device 104. The content access module 206 may also be configured to execute the secure package 230 and initialize the content policy TEE 208. Initializing the content policy TEE 208 may include verifying the authenticity of the secure package 230 and/or the executable code included in the secure package 230.

The content policy TEE 208 is configured to provide an isolated and secure execution environment within the environment 200. In some embodiments, the content policy TEE 208 may be embodied as a software-based trusted execution environment; that is, a trusted execution environment that securely executes software using the processor 120 of the destination computing device 102. For example, the content policy TEE 208 may be embodied as a software isolation TEE 128 established using the trusted execution environment support 122 of the processor 120, such as a secure enclave established using Intel® SGX technology. The content policy TEE 208 further establishes a key request module 210 and a content policy module 212. The various modules of the content policy TEE 208 may be embodied as hardware, firmware, software, or a combination thereof.

The key request module 210 is configured to extract an encrypted key access policy and an encrypted content key from the secure package 230 and request release of the content key from the key policy TEE 214. The key request module 210 may use any technique for communication between the content policy TEE 208 and the key policy TEE 214. For example, the key request module 210 may establish a network connection between the content policy TEE 208 and the key policy TEE 214, transmit information using a manageability interface such as a host embedded controller interface (HECI) bus, transmit information using a firmware mailbox, or use any other appropriate communication technique.

The content policy module 212 is configured to decrypt a content access policy using the decrypted content key supplied by the key policy TEE 214, execute a policy enforcement engine to evaluate the content access policy, and decrypt content using the content key based on successful evaluation of the content access policy. Thus, the content policy module 212 may support making a policy determination on whether to allow access to the content. For example, the content policy module 212 may support content aging, geographical limitations, departmental restrictions, or other rich policy determinations associated with the protected content.

The key policy TEE 214 is configured to provide an isolated and secure execution environment within the environment 200. In some embodiments, the key policy TEE 214 may be embodied as a hardware-based trusted execution environment; that is, a trusted execution environment that securely executes independently of software executed by the processor 120. For example, the key policy TEE 214 may be embodied using a coprocessor, out-of-band processor, or other component of the security engine 134. The key policy TEE 214 further establishes a key policy module 216 and a master wrapping key (MWK) 218. The various modules of the key policy TEE 214 may be embodied as hardware, firmware, software, or a combination thereof.

The key policy module 216 is configured to decrypt a key access policy included in the secure package 230 using the MWK 218 of the destination computing device 102. The key policy module 216 is further configured to evaluate the key access policy to determine whether to decrypt the encrypted content key. The key policy module 216 may also verify the authenticity of the content policy TEE 208 and/or the policy enforcement engine executed by the content policy TEE 208. Upon successful evaluation of the key access policy, the key policy module 216 further decrypts the content key using the MWK 218 and returns the decrypted content key to the content policy TEE 208. Thus, the key policy module 216 may support a policy determination on whether to allow access to encryption keys associated with the content. For example, the key policy module 216 may support device authentication, user/group authentication, or other rich policy determinations associated with the encryption keys.

The MWK 218 of the destination computing device 102 may be embodied as any encryption key that may be used to wrap, securely package, or otherwise encrypt data included in the secure package 230. For example, the MWK 218 may be embodied as a symmetric key, a private key of an asymmetric key pair, a private Enhanced Privacy Identification (EPID) key, or any other appropriate encryption key. The MWK 218 is protected by the key policy TEE 214 from unauthorized access by other components of the destination computing device 102. For example, the MWK 218 may be stored in secure storage accessible only to the key policy TEE 214. Continuing that example, in some embodiments, the MWK 218 may be stored in a protected hardware location such as flash memory accessible only to the security engine 134, or using a trusted platform module (TPM) of the destination computing device 102. In many embodiments, the MWK 218 may be provisioned to the destination computing device 102 at the time of manufacture. In those embodiments, the destination computing device 102 may be used to access secure packages 230 without the use of an ERM server 106 or other enterprise IT infrastructure. Additionally or alternatively, in some embodiments the MWK 218 may be provisioned to the destination computing device 102 when an organization takes ownership of the device.

In some embodiments, the environment 200 may establish a secure I/O path 220 between the content policy TEE 208 and/or the key policy TEE 214 and the display 136. The secure I/O path 220 is configured to allow content to remain encrypted or otherwise protected while being output for presentation on the display 136. Content transmitted over the secure I/O path 220 may not be intercepted, recorded, modified, or otherwise accessed by unrelated or unprivileged processes or other entities executed by the destination computing device 102. For example, the secure I/O path 220 may be embodied as a Protected Audio/Video Path (PAVP) provided by the I/O subsystem 124.

Still referring to FIG. 2, in the illustrative embodiment, the source computing device 104 establishes an environment 240 during operation. The illustrative environment 240 includes a content authoring module 242, a content policy trusted execution environment (TEE) 244, and a key policy trusted execution environment (TEE) 248. The various modules of the environment 240 may be embodied as hardware, firmware, software, or a combination thereof.

The content authoring module 242 is configured to generate content to be included in the secure package 230 and to transmit the completed secure package 230 to the destination computing device 102. The content authoring module 242 may be embodied as one or more content creation applications, plugins, or other content creation software of the source computing device 104. The content authoring module 242 may also be configured to initialize the content policy TEE 244.

The content policy TEE 244 is configured to provide an isolated and secure execution environment within the environment 240. In some embodiments, the content policy TEE 244 may be embodied as a software-based trusted execution environment; that is, a trusted execution environment that securely executes software using the processor 140 of the source computing device 104. For example, the content policy TEE 244 may be embodied as a software isolation TEE 148 established using the trusted execution environment support 142 of the processor 140, such as a secure enclave established using Intel® SGX technology. The content policy TEE 244 further establishes a content access policy module 246, which may be embodied as hardware, firmware, software, or a combination thereof.

The content access policy module 246 is configured to encrypt content and a content access policy using a content key. The content access policy module 246 is further configured to submit the encrypted content and content access policy to the key policy TEE 248 and to request creation of the secure package 230 from the key policy TEE 248. The content access policy module 246 may use any technique for communication between the content policy TEE 244 and the key policy TEE 248. For example, the content access policy module 246 may establish a network connection between the content policy TEE 244 and the key policy TEE 248, transmit information using a manageability interface such as a host embedded controller interface (HECI) bus, transmit information using a firmware mailbox, or use any other appropriate communication technique.

The key policy TEE 248 is configured to provide an isolated and secure execution environment within the environment 240. In some embodiments, the key policy TEE 248 may be embodied as a hardware-based trusted execution environment; that is, a trusted execution environment that securely executes independently of software executed by the processor 140. For example, the key policy TEE 248 may be established using a coprocessor, out-of-band processor, or other component of the security engine 154. The key policy TEE 248 further establishes a key access policy module 250 and the MWK 218. The various modules of the key policy TEE 248 may be embodied as hardware, firmware, software, or a combination thereof.

The key access policy module 250 is configured to encrypt the content key and a key access policy using the MWK 218 of the source computing device 104, and to generate the secure package 230. The secure package 230 may include encrypted content, the encrypted content access policy, the encrypted content key, the encrypted key access policy, and the policy enforcement engine.

As described above, the MWK 218 of the source computing device 104 may be embodied as any encryption key that may be used to wrap, securely package, or otherwise encrypt data included in the secure package 230. For example, the MWK 218 may be embodied as a symmetric key, a private key of an asymmetric key pair, a private Enhanced Privacy Identification (EPID) key, or any other appropriate encryption key. The MWK 218 is protected by the key policy TEE 248 from unauthorized access by other components of the source computing device 104. For example, the MWK 218 may be stored in secure storage accessible only to the key policy TEE 248. Continuing that example, in some embodiments, the MWK 218 may be stored in a protected hardware location such as flash memory accessible only to the security engine 154, or using a trusted platform module (TPM) of the source computing device 104. In many embodiments, the MWK 218 may be provisioned to the source computing device 104 at the time of manufacture. In those embodiments, the source computing device 104 may be used to author secure packages 230 without the use of an ERM server 106 or other enterprise IT infrastructure. Because the MWK 218 is provisioned at the time of manufacture, the source computing device 104 may be compatible with destination computing devices 102 using a similar pre-provisioned MWK 218. Additionally or alternatively, in some embodiments the MWK 218 may be provisioned to the source computing device 104 when an organization takes ownership of the device.

Referring now to FIG. 3, the schematic diagram 300 illustrates one potential embodiment of a secure package 230. The secure package includes content 302 and a content access policy 304 that are both encrypted using a content key 306. The content may be embodied as any digital data, including documents, text, video, audio, executable files, or other digital data. The content access policy 304 may embodied as a set of rules indicating when the content 302 may be accessed. As shown, the content 302 and the content access policy 304 may not be accessed without the content key 306.

The secure package 230 further includes the content key 306 and a key access policy 308 that are both encrypted using the MWK 218. The content key 306 may be embodied as a symmetric encryption key. The key access policy 308 may be embodied as a set of rules indicating when the content key 306 may be accessed. As shown, the content key 306 and the key access policy 308 may not be accessed without the MWK 218. Thus, the content key 306 and the key access policy 308 may not be accessed without using a key policy TEE 214, 248.

The secure package 230 further includes a policy enforcement engine 310. The policy enforcement engine 310 may be embodied as a binary executable, bytecode file, script file, or other code executable by the destination computing device 102. The policy enforcement engine 310 evaluates the content access policy 304 from within the content policy TEE 208 to determine whether the content 302 should be decrypted and presented to a user of the destination computing device 102 (for example, by the application 202 and/or the secure package plugin 204). Thus, the policy enforcement engine 310 may allow the destination computing device 102 to securely make a policy determination using contextual data available at the time the content 302 is accessed.

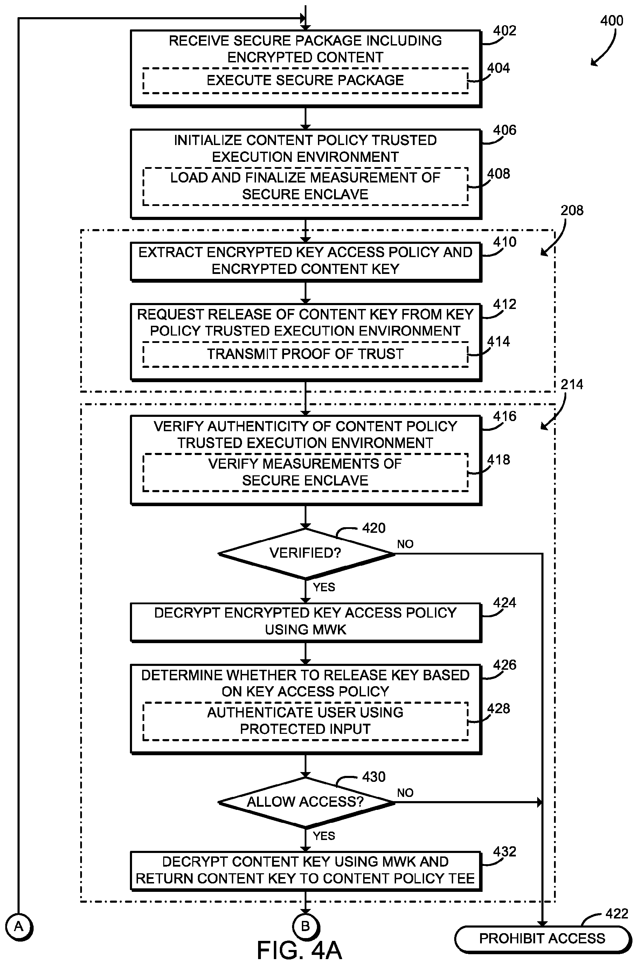

Referring now to FIG. 4A, in use, the destination computing device 102 may execute a method 400 for accessing a secure package 230. The method 400 begins with block 402, in which the destination computing device 102 receives a secure package 230 from the source computing device 104. As described above, the secure package 230 includes the encrypted content 302, content access policy 304, content key 306, and key access policy 308 as well as the policy enforcement engine 310. In some embodiments, in block 404, the destination computing device 102 may execute the secure package 230. For example, the secure package 230 may be embodied as a file executable by the destination computing device 102 such as a native binary executable, a bytecode file, a script file, or a self-extracting archive.

In block 406, the destination computing device 102 initializes the content policy TEE 208. The destination computing device 102 may perform any initialization procedures to allow the policy enforcement engine 310 to be executed securely within the content policy TEE 208. For example, the destination computing device 102 may initialize a software isolation TEE 128 using the TEE support 122 of the processor 120, such as a secure enclave established using Intel® SGX technology. In some embodiments, in block 408 the destination computing device 102 may load code and/or data into the software isolation TEE 128 and finalize measurements of the software isolation TEE 128. For example, the destination computing device 102 may measure the secure enclave by generating a cryptographic hash reflecting attributes of the software isolation TEE 128 such as the contents of the enclave, the order in which the software isolation TEE 128 was built, the addresses of the software isolation TEE 128 in the memory 126, and/or the security attributes of each page of the software isolation TEE 128. In some embodiments, the destination computing device 102 may add memory pages to the software isolation TEE 128 using a specialized processor instruction such as EADD, add measurements for memory pages that have been added to the software isolation TEE 128 using a specialized processor instruction such as EEXTEND, and finalize the software isolation TEE 128 measurement process using a specialized processor instruction such as EINIT. Prior to finalizing the measurements of the software isolation TEE 128, the destination computing device 102 may not be capable of executing any code within the software isolation TEE 128. After finalizing the measurements of the software isolation TEE 128, the code and/or data of the software isolation TEE 128 may not be modified without changing those measurements. Additionally or alternatively, in some embodiments finalizing the measurements of the software isolation TEE 128 may also verify that those measurements match measurements securely provided by the original author of the software isolation TEE 128 (e.g., the author of the policy enforcement engine 310). Thus, after finalizing the measurements of the software isolation TEE 128, the contents of the software isolation TEE 128 (e.g., the policy enforcement engine 310) may be verified and/or authenticated.

After initializing the content policy TEE 208 in block 406, execution of the method 400 proceeds with block 410 executed from within the content policy TEE 208. For example, the destination computing device 102 may transfer control to a software isolation TEE 128 that establishes the content policy TEE 208. In some embodiments, the destination computing device 102 may execute a specialized processor instruction such as EENTER to enter the software isolation TEE 128.

In block 410, the destination computing device 102, from within the content policy TEE 208, extracts the encrypted key access policy 308 and the encrypted content key 306 from the secure package 230. As described above, both the key access policy 308 and the encrypted content key 306 are encrypted with the master wrapping key (MWK) 218. The MWK is accessible only to the key policy TEE 214; thus, the content policy TEE 208 may not decrypt the key access policy 308 or the content key 306.

In block 412, the destination computing device 102, from within the content policy TEE 208, requests release of the content key 306 from the key policy TEE 214. The destination computing device 102 may use any communication technique or protocol to send the request. For example, in some embodiments, code executing within a software isolation TEE 128 may generate a network request, local socket connection, HECI bus message, or other message to the security engine 134 to release the content key 306. The content policy TEE 208 may submit the encrypted content key 306 and the encrypted key access policy 308 to the key policy TEE 214 when making the request. In some embodiments, in block 414, the content policy TEE 208 may transmit proof of trust to the key policy TEE 214. The proof of trust may be embodied as any signature, measurement, key, token, or other data that may be used by the key policy TEE 214 to confirm that the content policy TEE 208 and/or the policy enforcement engine 310 has not been tampered with or is otherwise authentic. For example, the content policy TEE 208 may submit measurements of the software isolation TEE 128 to the key policy TEE 214.

After requesting release of the content key 306, execution of the method 400 proceeds with block 416 executed from within the key policy TEE 214. For example, the destination computing device 102 may transfer control to the security engine 134, which establishes the key policy TEE 214.

In block 416, the destination computing device 102, from within the key policy TEE 214, verifies the authenticity of the content policy TEE 208 and/or the policy enforcement engine 310. The destination computing device 102 may use any technique to verify the authenticity of the content policy TEE 208. For example, the destination computing device 102 may verify a proof of trust such as one or more digital signatures, measurements, security tokens, or other data provided by the content policy TEE 208. In some embodiments, in block 418 the destination computing device 102 may verify measurements of a secure enclave including the content policy TEE 208 and/or the policy enforcement engine 310. The destination computing device 102 may use the measurements to verify that the secure enclave has not been tampered with and is executing authorized code.

In block 420, the destination computing device 102, from within the key policy TEE 214, determines whether the content policy TEE 208 has been verified. If not, the method 400 branches to block 422 in which the destination computing device 102 prohibits access to the secure package 230. The destination computing device 102 may perform any appropriate action to prohibit access, including generating an exception, generating an error message, or logging a security violation. Referring back to block 420, if the content policy TEE 208 has been verified, the method 400 advances to block 424.

In block 424, the destination computing device 102, from within the key policy TEE 214 decrypts the key access policy 308 using the MWK 218. As described above, the key policy TEE 214 may retrieve the MWK 218 from secure storage. For example, the security engine 134 may retrieve the MWK 218 from storage accessible only to the security engine 134, such as dedicated firmware of the security engine 134, or from a hardware component such as a trusted platform module (TPM).

In block 426, the destination computing device 102, from within the key policy TEE 214 determines whether to release the content key 306 based on the key access policy 308. The key access policy 308 may be embodied as a set of rules defining when the content key 306 may be decrypted. The key policy TEE 214 may evaluate those rules to determine whether to allow the content key 306 to be released. For example, the key access policy 308 may define allowed users or groups, access credentials, or allowed contexts. In some embodiments, the key policy TEE 214 may evaluate information available to the key policy TEE 214 via trusted sensors and/or a trusted configuration of the destination computing device 102. In block 428, in some embodiments, the destination computing device 102 may authenticate a current user of the destination computing device 102 using a protected input channel. For example, the destination computing device 102 may receive user credentials using a trusted PIN-pad technique. In that example, the destination computing device 102 may display a randomized number pad or keyboard input on the display 136 using a protected I/O path such as Intel® PAVP. Then, the destination computing device 102 may receive user input through an unsecure input such as a traditional keyboard or touch screen. In that example, the destination computing device 102 may securely authenticate the user because the user input depends on the contents of the display 136, which are protected from eavesdropping or alteration.

In block 430, the destination computing device 102 determines whether to allow access to the content key 306. If not, the method 400 branches to block 422, in which the destination computing device 102 prohibits access to the secure package 230, as described above. If the destination computing device 102 determines to allow access, the method 400 advances to block 432, in which the destination computing device 102 decrypts the content key 306 using the MWK 218 and returns the decrypted content key 306 to the content policy TEE 208. The destination computing device 102 may use any technique to transfer the content key 306 from the key policy TEE 214 to the content policy TEE 208, such as using a network connection, a local socket connection, an HECI bus message, a firmware mailbox, or another appropriate transmission technique.

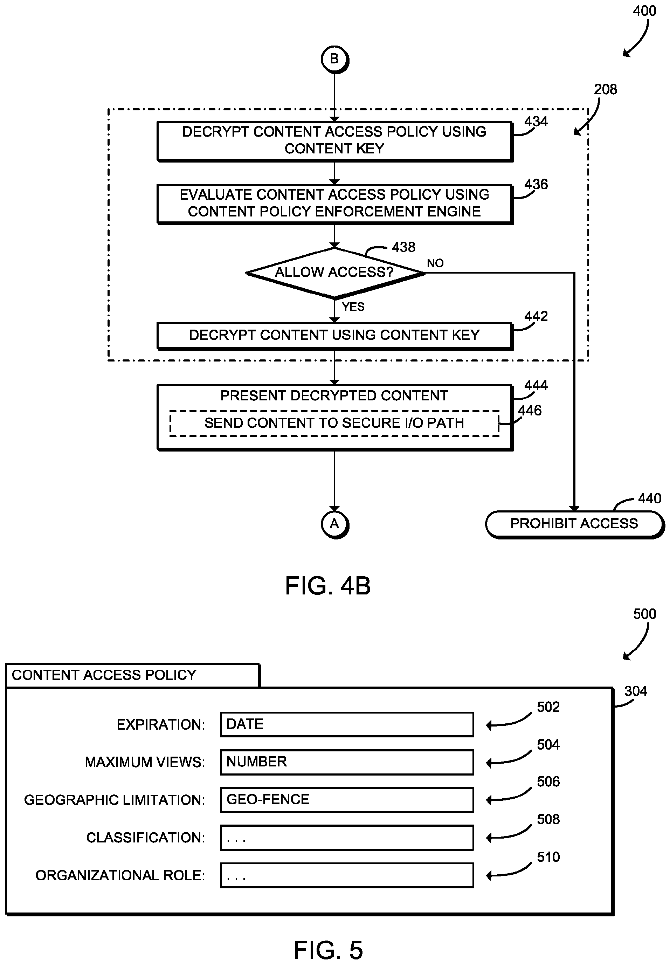

Referring now to FIG. 4B, execution of the method 400 proceeds with block 434 executed from within the content policy TEE 208. For example, the destination computing device 102 may transfer control from the security engine 134 to the software isolation TEE 128 that establishes the content policy TEE 208. In block 434, the destination computing device 102, from within the content policy TEE 208 decrypts the content access policy 304 using the content key 306. In block 436, the destination computing device 102, from within the content policy TEE 208, evaluates the content access policy 304 using the policy enforcement engine 310. The content access policy 304 includes a set of rules defining when the content 302 may be decrypted, such as an allowed context of the destination computing device 102 in which the content 302 may be decrypted. The policy enforcement engine 310 may be embodied as any code or other executable that may be executed to interpret the content access policy 304 and determine whether the rules have been satisfied.

For example, referring now to FIG. 5, the schematic diagram 500 illustrates one potential embodiment of a content access policy 304. The illustrative content access policy includes five rules 502, 504, 506, 508, 510. The illustrative rule 502 is an expiration date rule. The rule 502 may define an expiration date for the content 302, after which the content 302 may no longer be accessed. The rule 502 may specify the expiration date as an absolute calendar date, a relative date, a time interval, or any other measure of time. The illustrative rule 504 is a content access number limitation rule. The rule 504 may define a maximum number of times that the content 302 may be accessed. After that number of accesses has been exceeded, the content 302 may no longer be accessed. In some embodiments, the previous number of accesses may be stored in the content access policy 304 and/or otherwise stored in the secure package 230. The illustrative rule 506 is a geographic limitation rule. The rule 506 may define geographical bounds-also known as a geo-fence-inside of which the content 302 may be accessed. The illustrative rule 508 is a security classification rule. The rule 508 may define a security or sensitivity level required for a user with the content 302 (e.g., "secret," "top secret," "confidential," "privileged," etc.). The illustrative rule 510 is an organization role rule. The rule 510 may define one or more roles, departments, groups, or other organizational units that are allowed to access the content 302. The rules of the diagram 500 are illustrative; the content access policy 304 may include a different number of rules and different types of rules in other embodiments.

Referring back to FIG. 4B, after evaluating the content access policy 304, in block 438 the destination computing device 102, from within the content policy TEE 208, determines whether to allow access to the content 302. If not, the method branches to block 440, in which the destination computing device 102 prohibits access to the secure package 230, similar to block 422 described above. If the destination computing device 102 determines to allow access, the method 400 advances to block 442, in which the destination computing device 102, from within the content policy TEE 208 decrypts the content 302 using the content key 306. In some embodiments, the content policy TEE 208 may also verify a digital signature of the content 302 using a master signing key (MSK) (not shown).

After decrypting the content 302, execution of the method 400 leaves the content policy TEE 208. For example, the destination computing device 102 may execute a specialized processor instruction such as EEXIT instruction to exit a software isolation TEE 128. In block 444, after leaving the content policy TEE 208, the destination computing device 102 presents the decrypted content 302 to the user. For example, the destination computing device 102 may display or load the content 302 for viewing or editing using an application 202 or a plugin 204 associated with the application 202. In some embodiments, in block 446 the destination computing device 102 may present the content to the user by sending the decrypted content 306 over a secure I/O path. For example, the destination computing device 102 may display visual content on the display 136 using Intel® PAVP. After presenting the decrypted content, the method 400 loops back to block 402 shown in FIG. 4A to continue accessing additional secure packages 230.

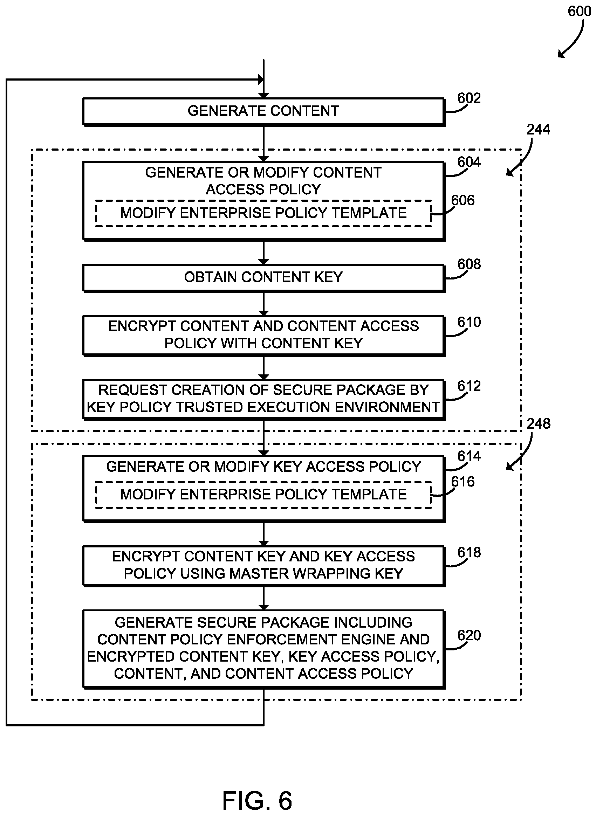

Referring now to FIG. 6, in use, the source computing device 104 may execute a method 600 for authoring a secure package 230. The method 600 begins with block 602, in which the source computing device 104 generates content 302. The source computing device 104 may, for example, execute one or more applications that allow a user to generate the content 302.

After generating the content 302, execution of the method 600 proceeds to block 604 within the content policy TEE 244. For example, the source computing device 104 may transfer control to a software isolation TEE 148 that establishes the content policy TEE 244, such as a secure enclave established using Intel® SGX technology. In some embodiments, the source computing device 104 may execute a specialized processor instruction such as EENTER to enter the software isolation TEE 148. In block 604, the source computing device 104 generates or modifies the content access policy 304. As described above, the content access policy 304 includes a set of rules defining when the content 302 may be accessed, such as an allowed context of the destination computing device 102 in which the content 302 may be decrypted. In some embodiments, the user of the source computing device 104 may specify the rules of the content access policy 304 or parameters of those rules. In some embodiments, in block 606 the source computing device 104 may modify an enterprise policy template. The enterprise policy template may be received, for example, from the ERM server 106.

In block 608, the source computing device 104, from within the content policy TEE 244, obtains the content key 306. The source computing device 104 may use any technique to obtain the content key 306. For example, the source computing device 104 may generate a new content key 306, retrieve a content key 306 associated with the user of the source computing device 104, retrieve a content key 306 associated with a user of the destination computing device 102, or otherwise obtain the content key 306. In block 610, the source computing device 104 encrypts the content 302 and the content access policy 304 using the content key 306. In some embodiments, the source computing device 104 may also digitally sign the content 302 using a master signing key (MSK) (not shown).

In block 612, the source computing device 104, from within the content policy TEE 244, requests creation of a secure package 230 from the key policy TEE 248. The source computing device 104 may use any communication technique or protocol to send the request. For example, in some embodiments, code executing within a software isolation TEE 148 may issue a network request, open a local socket connection, transmit an HECI bus message, or send some other message to the security engine 154 to create the secure package 230. The content policy TEE 244 may submit the content key 306 as well as the encrypted content 302 and the encrypted content access policy 304 to the key policy TEE 248 when making the request.

After requesting creation of the secure package 230, execution of the method 600 proceeds to block 614 within the key policy TEE 248. For example, the source computing device 104 may transfer control to the security engine 154, which establishes the key policy TEE 248. In block 614, the source computing device 104, from within the key policy TEE 248, generates or modifies the key access policy 308. As described above, the key access policy 308 may be embodied as a set of rules defining when the content key 306 may be accessed. In some embodiments, the user of the source computing device 104 may specify the rules of the key access policy 308 or parameters of those rules. In some embodiments, in block 616 the source computing device 104 may modify an enterprise policy template. The enterprise policy template may be received, for example, from the ERM server 106.

In block 618, the source computing device 104, from within the key policy TEE 248, encrypts the content key 306 and the key access policy 308 using the MWK 218. As described above, the key policy TEE 248 may retrieve the MWK 218 from secure storage. For example, the security engine 154 may retrieve the MWK 218 from storage accessible only to the security engine 154, such as dedicated firmware of the security engine 154, or from a hardware component such as a trusted platform module (TPM).

In block 620, the source computing device 104, from within the key policy TEE 248, generates the secure package 230 including the content policy enforcement engine 310 and the encrypted content 302, content access policy 304, content key 306, and key access policy 308. After generation, the secure package 230 may be stored by the data storage device 150 or transmitted via the network 108 to one or more remote hosts (such as the destination computing device 102). Although illustrated as being generated from within the key policy TEE 248, in other embodiments the secure package 230 may be generated from within the content policy TEE 244 or from outside of any trusted execution environment. For example, the key policy TEE 248 may return the encrypted content key 306 and key access policy 308 to the content policy TEE 244. The content policy TEE 244 may generate the secure package 230, or may return the encrypted content 302, content access policy 304, content key 306, and key access policy 308 to untrusted code, which may in turn generate the secure package 230. After the secure package 230 is generated, the method 600 loops back to block 602 to generate and package additional content 302.

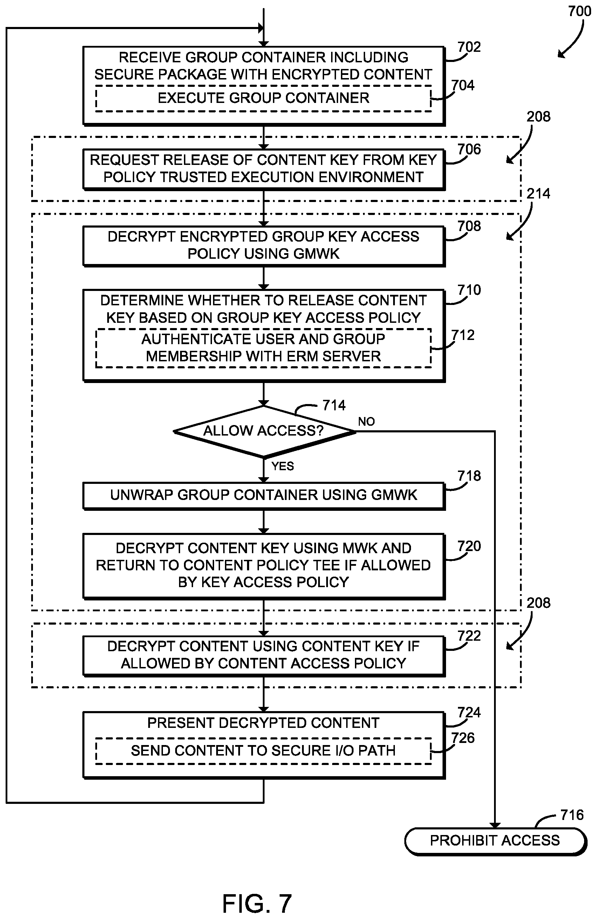

Referring now to FIG. 7, in use, the destination computing device 102 may execute a method 700 for accessing a secure group container. The method 700 begins with block 702, in which the destination computing device 102 receives a group container including a secure package 230 from the source computing device 104. The group container includes the secure package 230 and a group key access policy that are both encrypted and/or wrapped with a group master wrapping key. The group master wrapping key may be distinct from the master wrapping key 218. As described above, the secure package 230 includes the encrypted content 302, content access policy 304, content key 306, and key access policy 308 as well as the policy enforcement engine 310. In some embodiments, in block 704, the destination computing device 102 may execute the secure group container. For example, the group container may be embodied as a file executable by the destination computing device 102 such as a native binary executable, a bytecode file, a script file, or a self-extracting archive.

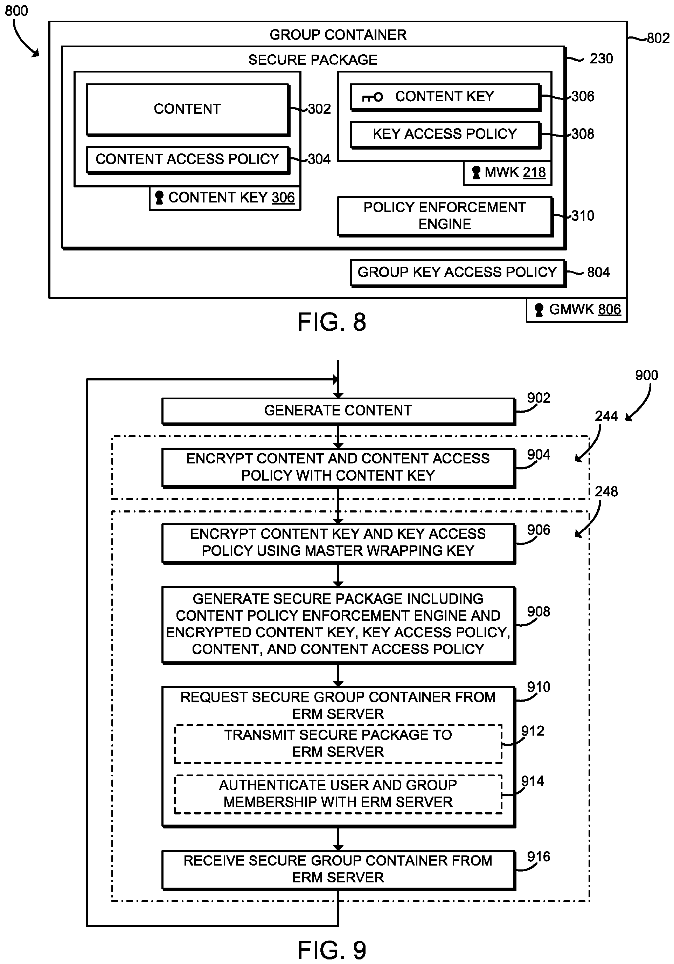

Referring now to FIG. 8, the schematic diagram 800 illustrates one potential embodiment of a secure group container 802. As shown, the group container 802 includes a secure package 230 and a group key access policy 804. The secure package 230 may include the same components as described above in connection with FIG. 3. Both the secure package 230 and the group key access policy 804 may be wrapped, encrypted, signed, or otherwise secured using the group master wrapping key 806. The group master wrapping key 806 may not be included in the group container 802. In some embodiments the group master wrapping key 806 may be deployed to the key policy TEE 214 of the destination computing device 102 and/or the key policy TEE 248 of the source computing device 104. For example, the group master wrapping key 806 may be deployed to a computing device 102, 104 when that device is purchased and/or deployed by a particular organization.

Referring back to FIG. 7, after receiving the group container in block 702, execution of the method 700 proceeds to block 706 within the content policy TEE 208. In block 706, the destination computing device 102 requests release of the content key 306 from the key policy TEE 214. The destination computing device 102 may use any communication technique or protocol to send the request. For example, in some embodiments, code executing within a software isolation TEE 128 may issue a network request, open a local socket connection, create an HECI bus message, or submit any other type of message to the security engine 134 to release the content key 306. The content policy TEE 208 may submit the secure group container to the key policy TEE 214 when making the request. In addition to requesting release of the content key 306, the destination computing device 102 may perform related operations such as initializing the content policy TEE 208, extracting items from the secure group container and/or secure package 230, or transmitting proof of trust to the key policy TEE 214, for example as shown in blocks 402 to 414 of FIG. 4A.

After requesting release of the content key 306, execution of the method 700 proceeds to block 708 within the key policy TEE 214. For example, the destination computing device 102 may transfer control to the security engine 134, which establishes the key policy TEE 214.

In block 708, the destination computing device 102, from within the key policy TEE 214 decrypts the group access policy using the group master wrapping key (GMWK). Similar to the MWK 218, and as described above in connection with block 424 of FIG. 4A, the key policy TEE 214 may retrieve the GMWK from secure storage. For example, the security engine 134 may retrieve the GMWK from storage accessible only to the security engine 134, such as dedicated flash memory of the security engine 134, or from a hardware component such as a trusted platform module (TPM).

In block 710, the destination computing device 102, from within the key policy TEE 214 determines whether to release the content key 306 based on the group key access policy. Similar to the key access policy 308, the group key access policy may be embodied as a set of rules defining when the content key 306 may be accessed. The key policy TEE 214 may evaluate those rules to determine whether to allow the content key 306 to be released. In particular, the group key access policy may define allowed users and/or allowed group memberships. In some embodiments, in block 712, the destination computing device 102 may authenticate the user and/or group membership of a current user of the destination computing device 102 with the ERM server 106.

In block 714, the destination computing device 102 determines whether to allow access to the content key 306. If not, the method 700 branches to block 716, in which the destination computing device 102 prohibits access to the group container and to the included secure package 230. If the destination computing device 102 determines to allow access, the method 700 advances to block 718, in which the destination computing device 102 unwraps the secure group container using the GMWK. Unwrapping the secure group container may produce the secure package 230.

In block 720, the destination computing device 102 decrypts the content key 306 using the MWK 218 and returns the content key 306 to the content policy TEE 208 if allowed by the key access policy 308. To perform those operations, the destination computing device 102 may verify the authenticity of the content policy TEE 208, evaluate the key access policy 308, or perform other processes as described above in connection with blocks 416 through 432 of FIG. 4A.

After decryption of the content key 306, execution of the method 700 proceeds to block 722 within the content policy TEE 208. For example, the destination computing device 102 may transfer control from the security engine 134 to a software isolation TEE 128 that establishes the content policy TEE 208. In block 722, the destination computing device 102 decrypts the content 302 if allowed by the content access policy 304. To perform those operations, the destination computing device 102 may decrypt and evaluate the content access policy 304 or perform any other processes as described above in connection with blocks 434 through 442 of FIG. 4B.

After decrypting the content 302, execution of the method 700 leaves the content policy TEE 208. For example, the destination computing device 102 may execute a specialized processor instruction such as EEXIT instruction to exit a software isolation TEE 128. In block 724, after leaving the content policy TEE 208, the destination computing device 102 presents the decrypted content 302 to the user. For example, the destination computing device 102 may display or load the content 302 for viewing or editing using an application 202 or a plugin 204 associated with the application 202. In some embodiments, in block 726 the destination computing device 102 may present the content to the user by sending the decrypted content 306 over a secure I/O path. For example, the destination computing device 102 may display visual content on the display 136 using Intel® PAVP. After presenting the decrypted content 302, the method 700 loops back to block 702 to receive additional secure group containers.

Referring now to FIG. 9, the source computing device 104 may execute a method 900 for authoring a secure package 230. The method 900 begins with block 902, in which the source computing device 104 generates content 302. The source computing device 104 may, for example, execute one or more applications that allow a user to generate the content 302.

After generating the content 302, execution of the method 900 proceeds to block 904 within the content policy TEE 244. For example, the source computing device 104 may transfer control to a software isolation TEE 148 that establishes the content policy TEE 244. In some embodiments, the source computing device 104 may execute a specialized processor instruction such as EENTER to enter the software isolation TEE 148. In block 904, the source computing device 104 encrypts the content 302 and the content access policy 304 using the content key 306. The source computing device 104 may perform other operations including modifying the content access policy 304 or obtaining the content key 306 as described above in connection with blocks 604 through 612 of FIG. 6.

After encrypting the content 302 and the content access policy 304, execution of the method 900 proceeds to block 906 within the key policy TEE 248. For example, the source computing device 104 may transfer control to the security engine 154, which establishes the key policy TEE 248. In some embodiments, the source computing device 104 may transfer the encrypted content 302 and/or the encrypted content access policy 304 to the key policy TEE 248. In block 906, the source computing device 104, from within the key policy TEE 248, encrypts the content key 306 and the key access policy 308 using the MWK 218. The source computing device 104 may perform other operations including modifying the key access policy 308 as described above in connection with blocks 614 through 618 of FIG. 6. In block 908, the source computing device 104, from within the key policy TEE 248, generates the secure package 230 including the content policy enforcement engine 310 and the encrypted content 302, content access policy 304, content key 306, and key access policy 308, similar to as described above in connection with block 620 of FIG. 6.

In block 910, the source computing device 104 requests a secure group container from the ERM server 106. The source computing device 104 may perform any protocol or other technique to request a secure group container that includes the secure package 230 created in connection with block 908 wrapped and/or encrypted using a group master wrapping key (GMWK). In some embodiments, the ERM server 106 may provide an empty group container that may be used to wrap the secure package 230. In block 912, in some embodiments the source computing device 104 may transmit the secure package 230 to the ERM server 106. In block 914, as part of requesting the secure group container, in some embodiments the source computing device 104 may authenticate user and/or group membership with the ERM server 106. For example, the ERM server 106 may process the secure package 230 only if the source computing device 104 provides appropriate group credentials.

In block 916, the source computing device 104, from within the key policy TEE 248, receives the secure group container from the ERM server 106. As described above, the secure group container includes the secure package 230 and a group key access policy wrapped and/or encrypted with the group master wrapping key. Thus, the secure group container may provide an additional level of policy rules that may be used to determine whether to grant access to the content 302. After receiving the secure group container, the method 900 loops back to block 902 to author additional content.

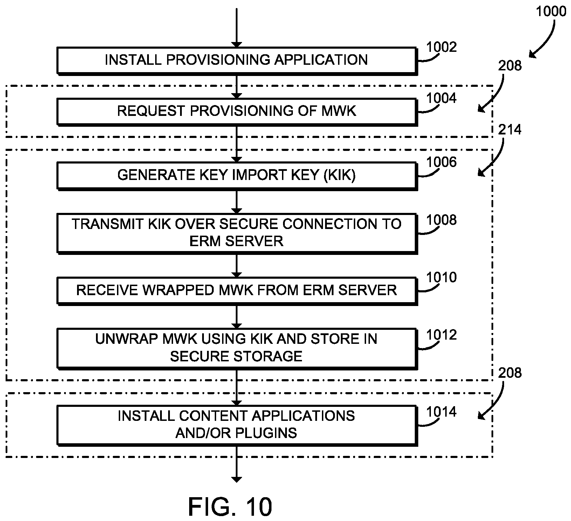

Referring now to FIG. 10, in use the destination computing device 102 may execute a method 1000 for provisioning the master wrapping key 218. The method 1000 may be executed one time when the destination computing device 102 is provisioned, for example when an organization takes ownership of the destination computing device 102. Although described as being executed by the destination computing device 102, it should be understood that the method 1000 may also be executed to provision the master wrapping key 218 to the source computing device 104. The method 1000 beings in block 1002, in which the destination computing device 102 installs a provisioning application. The provisioning application may be embodied as any application package, installation package, script, or other executable that may be used by the destination computing device 102 to install software and/or other data. The provisioning application may be provided by the organization that takes ownership of the destination computing device 102, for example using the ERM server 106.

After installing the provisioning application, execution of the method 1000 proceeds with block 1004 executed from within the content policy TEE 208. As described above, the destination computing device 102 may transfer control to a software isolation TEE 128 that establishes the content policy TEE 208. In some embodiments, the destination computing device 102 may execute a specialized processor instruction such as EENTER to enter the software isolation TEE 128. In block 1004, the destination computing device 102, from within the content policy TEE 208 requests provisioning of the MWK 218 from the key policy TEE 214. The destination computing device 102 may use any communication technique or protocol to send the request. For example, in some embodiments code executing within a software isolation TEE 128 may issue a network request, establish a local socket connection, transmit an HECI bus message, or send another message to the security engine 134 to request provisioning the MWK 218.

After requesting provisioning of the MWK 218, execution of the method 1000 proceeds with block 1006 executed from within the key policy TEE 214. For example, the destination computing device 102 may transfer control to the security engine 134, which establishes the key policy TEE 214. In block 1006, the destination computing device 102, from within the key policy TEE 214, generates a key import key (KIK). The KIK may be embodied as any symmetric key, public key of an asymmetric key pair, or other encryption key that may be used by the ERM server 106 to securely transmit the MWK 218 to the destination computing device 102.

In block 1008, the destination computing device 102, from within the key policy TEE 214 transmits the KIK over a secure network connection to the ERM server 106. For example, the destination computing device 102 may establish a Transport Layer Security (TLS) connection with the ERM server 106. Upon receiving the KIK, the ERM server 106 may verify that the KIK has been attested by the destination computing device 102. To do so, the ERM server 106 may perform any process or protocol to verify that the KIK was created by the key policy TEE 214 of the destination computing device 102. If the KIK is verified, the ERM server 106 may wrap or otherwise encrypt the MWK 218 using the KIK. In block 1010, the destination computing device 102, from within the key policy TEE 214, receives the wrapped MWK 218 from the ERM server 106 over the secure network connection. In block 1012, the destination computing device 102, from within the key policy TEE 214, unwraps or otherwise decrypts the MWK 218 using the KIK and stores the MWK 218 into secure storage. After being stored, the MWK 218 is accessible only to the key policy TEE 214 and not to other components of the destination computing device 102, including other trusted execution environments.

After storing the MWK 218, execution of the method 1000 proceeds with block 1014 executed from within the content policy TEE 208. For example, the destination computing device 102 may transfer control from the security engine 134 to the software isolation TEE 128 that establishes the content policy TEE 208. In block 1014, the destination computing device 102, from within the content policy TEE 208, may install content applications 202 and/or secure package plugins 204 that may be used to access secure packages 230. After completing block 1014 and thereby provisioning the MWK 218 to the destination computing device 102, the method 1000 is completed. After completion of the method 1000, the destination computing device 102 may be used to access secure packages 230, for example by executing the methods 400, 700 as described above.

### EXAMPLES

Illustrative examples of the technologies disclosed herein are provided below. An embodiment of the technologies may include any one or more, and any combination of, the examples described below.
Example 1 includes a computing device for accessing encrypted content, the computing device comprising a content access module to receive a secure package, wherein the secure package includes content, a content access policy, a content key, a key access policy, and a policy enforcement engine, wherein each of the content and the content access policy is encrypted by the content key and wherein each of the content key and the key access policy is encrypted by a master wrapping key; a key policy trusted execution environment to establish a key policy module, the key policy module to: (i) decrypt the key access policy using the master wrapping key and (ii) determine whether to decrypt the content key based on the key access policy; and a content policy trusted execution environment to establish a content policy module, the content policy module to: (i) decrypt the content access policy using the content key in response to a determination, by the key policy module, to decrypt the content key, (ii) execute the policy enforcement engine to determine whether to decrypt the content based on the content access policy, and (iii) decrypt the content using the content key in response to a determination, by the policy enforcement engine, to decrypt the content.
Example 2 includes the subject matter of Example 1, and wherein the master wrapping key is protected by the key policy trusted execution environment.
Example 3 includes the subject matter of any of Examples 1 and 2, and wherein the content access module is further to execute the secure package in response to receipt of the secure package.
Example 4 includes the subject matter of any of Examples 1-3, and wherein to execute the secure package comprises to execute the secure package by a plugin of a content application of the computing device.
Example 5 includes the subject matter of any of Examples 1-4, and wherein the content access module is further to initialize the content policy trusted execution environment in response to receipt of the secure package.
Example 6 includes the subject matter of any of Examples 1-5, and further comprising a processor having secure enclave support; wherein to initialize the content policy trusted execution environment comprises to load a secure enclave using the secure enclave support of the processor.
Example 7 includes the subject matter of any of Examples 1-6, and wherein to initialize the content policy trusted execution environment comprises to measure the secure enclave of the content policy trusted execution environment.
Example 8 includes the subject matter of any of Examples 1-7, and further comprising a manageability engine to establish the key policy trusted execution environment.
Example 9 includes the subject matter of any of Examples 1-8, and wherein the content policy trusted execution environment is further to establish a key request module to extract the encrypted key access policy and the encrypted content key from the secure package; and request release of the content key from the key policy trusted execution environment of the computing device.
Example 10 includes the subject matter of any of Examples 1-9, and further comprising a secure enclave to establish the content policy trusted execution environment; and a manageability engine to establish the key policy trusted execution environment; wherein to request release of the content key comprises to transmit the request to release the content key from the secure enclave to the manageability engine.
Example 11 includes the subject matter of any of Examples 1-10, and wherein to request release of the content key comprises to transmit a proof of trust from the content policy trusted execution environment to the key policy trusted execution environment.
Example 12 includes the subject matter of any of Examples 1-11, and further comprising a secure enclave to establish the content policy trusted execution environment, wherein the proof of trust comprises a measurement of the secure enclave.
Example 13 includes the subject matter of any of Examples 1-12, and wherein the key policy module is further to verify that the content policy trusted execution environment is authentic; and to decrypt the key access policy comprises to decrypt the key access policy in response to a verification that the content policy trusted execution environment is authentic.
Example 14 includes the subject matter of any of Examples 1-13, and further comprising a secure enclave to establish the content policy trusted execution environment, wherein to verify that the content policy trusted execution environment is authentic comprises to verify a measurement of the secure enclave.
Example 15 includes the subject matter of any of Examples 1-14, and wherein to determine whether to decrypt the content key based on the key access policy comprises to authenticate a user using a protected input path of the key policy trusted execution environment.
Example 16 includes the subject matter of any of Examples 1-15, and wherein the key policy module is further to decrypt the content key using the master wrapping key in response to the determination to decrypt the content key.
Example 17 includes the subject matter of any of Examples 1-16, and wherein to execute the policy enforcement engine comprises to evaluate at least one content access policy rule of the content access policy selected from a content expiration date rule, a content access number limitation rule, a geographic limitation rule, a security classification rule, or an organizational role rule.
Example 18 includes the subject matter of any of Examples 1-17, and wherein the content policy module is further to transmit the content via a secure I/O path for presentation to a user.
Example 19 includes the subject matter of any of Examples 1-18, and wherein the secure I/O path comprises a protected audio video path of the computing device.
Example 20 includes a computing device for authoring secure content, the computing device comprising a content policy trusted execution environment to establish a content access policy module to encrypt each of (i) content and (ii) a content access policy with a content key; and a key policy trusted execution environment to establish a key access policy module to (i) encrypt each of the content key and a key access policy with a master wrapping key and (ii) generate a secure package that includes the encrypted content, the encrypted content access policy, the encrypted content key, the encrypted key access policy, and a policy enforcement engine.
Example 21 includes the subject matter of Example 20, and wherein the master wrapping key is protected by the key policy trusted execution environment.
Example 22 includes the subject matter of any of Examples 20 and 21, and further comprising a content authoring module to initialize the content policy trusted execution environment.
Example 23 includes the subject matter of any of Examples 20-22, and further comprising a processor having secure enclave support; wherein to initialize the content policy trusted execution environment comprises to load a secure enclave using the secure enclave support of the processor.
Example 24 includes the subject matter of any of Examples 20-23, and further comprising a manageability engine to establish the key policy trusted execution environment.
Example 25 includes the subject matter of any of Examples 20-24, and wherein the content access policy module is further to request creation of the secure package by the key policy trusted execution environment.
Example 26 includes the subject matter of any of Examples 20-25, and further comprising a secure enclave to establish the content policy trusted execution environment; and a manageability engine to establish the key policy trusted execution environment; wherein to request creation of the secure package comprises to transmit the request to create the secure package from the secure enclave to the manageability engine.
Example 27 includes the subject matter of any of Examples 20-26, and wherein the content access policy module is further to generate the content access policy.
Example 28 includes the subject matter of any of Examples 20-27, and wherein to generate the content access policy comprises to modify an enterprise policy template.
Example 29 includes the subject matter of any of Examples 20-28, and wherein the key access policy module is further to generate the key access policy.
Example 30 includes the subject matter of any of Examples 20-29, and wherein to generate the key access policy comprises to modify an enterprise policy template.
Example 31 includes a method for accessing encrypted content, the method comprising receiving, by a computing device, a secure package including: content, a content access policy, a content key, a key access policy, and a policy enforcement engine, wherein each of the content and the content access policy is encrypted by the content key and wherein each of the content key and the key access policy is encrypted by a master wrapping key; decrypting, by a key policy trusted execution environment of the computing device, the key access policy using the master wrapping key; determining, by the key policy trusted execution environment, whether to decrypt the content key based on the key access policy; decrypting, by a content policy trusted execution environment of the computing device, the content access policy using the content key in response to determining to decrypt the content key; executing, by the content policy trusted execution environment, the policy enforcement engine to determine whether to decrypt the content based on the content access policy; and decrypting, by the content policy trusted execution environment, the content using the content key in response to determining to decrypt the content.
Example 32 includes the subject matter of Example 31, and wherein the master wrapping key is protected by the key policy trusted execution environment.
Example 33 includes the subject matter of any of Examples 31 and 32, and further comprising executing, by the computing device, the secure package in response to receiving the secure package.
Example 34 includes the subject matter of any of Examples 31-33, and wherein executing the secure package comprises executing the secure package by a plugin of a content application of the computing device.
Example 35 includes the subject matter of any of Examples 31-34, and further comprising initializing, by the computing device, the content policy trusted execution environment in response to receiving the secure package.
Example 36 includes the subject matter of any of Examples 31-35, and wherein initializing the content policy trusted execution environment comprises loading a secure enclave using secure enclave support of a processor of the computing device.
Example 37 includes the subject matter of any of Examples 31-36, and wherein initializing the content policy trusted execution environment comprises measuring the secure enclave of the content policy trusted execution environment.
Example 38 includes the subject matter of any of Examples 31-37, and further comprising establishing, by the computing device, the key policy trusted execution environment using a manageability engine of the computing device.
Example 39 includes the subject matter of any of Examples 31-38, and further comprising extracting, by the content policy trusted execution environment of the computing device, the encrypted key access policy and the encrypted content key from the secure package; and requesting, by the content policy trusted execution environment of the computing device, release of the content key from the key policy trusted execution environment of the computing device.
Example 40 includes the subject matter of any of Examples 31-39, and wherein requesting release of the content key comprises transmitting the request to release the content key from a secure enclave of the computing device comprising the content policy trusted execution environment to a manageability engine of the computing device comprising the key policy trusted execution environment.
Example 41 includes the subject matter of any of Examples 31-40, and wherein requesting release of the content key comprises transmitting a proof of trust from the content policy trusted execution environment to the key policy trusted execution environment.
Example 42 includes the subject matter of any of Examples 31-41, and wherein transmitting the proof of trust comprises transmitting a measurement of a secure enclave comprising the content policy trusted execution environment.
Example 43 includes the subject matter of any of Examples 31-42, and further comprising verifying, by the key policy trusted execution environment of the computing device, that the content policy trusted execution environment is authentic; wherein decrypting the key access policy comprises decrypting the key access policy in response to verifying that the content policy trusted execution environment is authentic.
Example 44 includes the subject matter of any of Examples 31-43, and wherein verifying that the content policy trusted execution environment is authentic comprises verifying a measurement of a secure enclave comprising the content policy trusted execution environment.
Example 45 includes the subject matter of any of Examples 31-44, and wherein determining whether to decrypt the content key based on the key access policy comprises authenticating a user using a protected input path of the key policy trusted execution environment.
Example 46 includes the subject matter of any of Examples 31-45, and further comprising decrypting, by the key policy trusted execution environment of the computing device, the content key using the master wrapping key in response to determining to decrypt the content key.
Example 47 includes the subject matter of any of Examples 31-46, and wherein executing the policy enforcement engine comprises evaluating at least one content access policy rule of the content access policy selected from a content expiration date rule, a content access number limitation rule, a geographic limitation rule, a security classification rule, or an organizational role rule.
Example 48 includes the subject matter of any of Examples 31-47, and further comprising transmitting, by the content policy trusted execution environment, the content via a secure I/O path for presentation to a user.
Example 49 includes the subject matter of any of Examples 31-48, and wherein transmitting the content via the secure I/O path comprises transmitting the content via a protected audio video path of the computing device.
Example 50 includes a method for authoring secure content, the method comprising encrypting, by a content policy trusted execution environment of a computing device, each of (i) content and (ii) a content access policy using a content key; encrypting, by a key policy trusted execution environment of the computing device, each of (i) the content key and (ii) a key access policy using a master wrapping key; and generating, by the key policy trusted execution environment, a secure package including the encrypted content, the encrypted content access policy, the encrypted content key, the encrypted key access policy, and a policy enforcement engine.
Example 51 includes the subject matter of Example 50, and wherein the master wrapping key is protected by the key policy trusted execution environment.
Example 52 includes the subject matter of any of Examples 50 and 51, and further comprising initializing, by the computing device, the content policy trusted execution environment.
Example 53 includes the subject matter of any of Examples 50-52, and wherein initializing the content policy trusted execution environment comprises loading a secure enclave using secure enclave support of a processor of the computing device.
Example 54 includes the subject matter of any of Examples 50-53, and further comprising establishing, by the computing device, the key policy trusted execution environment using a manageability engine of the computing device.
Example 55 includes the subject matter of any of Examples 50-54, and further comprising requesting, by the content policy trusted execution environment, creation of the secure package by the key policy trusted execution environment.
Example 56 includes the subject matter of any of Examples 50-55, and wherein requesting creation of the secure package comprises transmitting the request to create the secure package from a secure enclave of the computing device comprising the content policy trusted execution environment to a manageability engine of the computing device comprising the key policy trusted execution environment.
Example 57 includes the subject matter of any of Examples 50-56, and further comprising generating the content access policy by the content policy trusted execution environment.
Example 58 includes the subject matter of any of Examples 50-57, and wherein generating the content access policy comprises modifying an enterprise policy template.
Example 59 includes the subject matter of any of Examples 50-58, and further comprising generating the key access policy by the key policy trusted execution environment.
Example 60 includes the subject matter of any of Examples 50-59, and wherein generating the key access policy comprises modifying an enterprise policy template.
Example 61 includes a computing device comprising a processor; and a memory having stored therein a plurality of instructions that when executed by the processor cause the computing device to perform the method of any of Examples 31-60.
Example 62 includes one or more machine readable storage media comprising a plurality of instructions stored thereon that in response to being executed result in a computing device performing the method of any of Examples 31-60.
Example 63 includes a computing device comprising means for performing the method of any of Examples 31-60.
Example 64 includes a computing device for accessing encrypted content, the computing device comprising means for receiving a secure package including: content, a content access policy, a content key, a key access policy, and a policy enforcement engine, wherein each of the content and the content access policy is encrypted by the content key and wherein each of the content key and the key access policy is encrypted by a master wrapping key; means for decrypting, by a key policy trusted execution environment, the key access policy using the master wrapping key; means for determining, by the key policy trusted execution environment, whether to decrypt the content key based on the key access policy; means for decrypting, by a content policy trusted execution environment, the content access policy using the content key in response to determining to decrypt the content key; means for executing, by the content policy trusted execution environment, the policy enforcement engine to determine whether to decrypt the content based on the content access policy; and means for decrypting, by the content policy trusted execution environment, the content using the content key in response to determining to decrypt the content.
Example 65 includes the subject matter of Example 64, and wherein the master wrapping key is protected by the key policy trusted execution environment.
Example 66 includes the subject matter of any of Examples 64 and 65, and further comprising means for executing the secure package in response to receiving the secure package.
Example 67 includes the subject matter of any of Examples 64-66, and wherein the means for executing the secure package comprises means for executing the secure package by a plugin of a content application of the computing device.
Example 68 includes the subject matter of any of Examples 64-67, and further comprising means for initializing the content policy trusted execution environment in response to receiving the secure package.
Example 69 includes the subject matter of any of Examples 64-68, and wherein the means for initializing the content policy trusted execution environment comprises means for loading a secure enclave using secure enclave support of a processor of the computing device.
Example 70 includes the subject matter of any of Examples 64-69, and wherein the means for initializing the content policy trusted execution environment comprises means for measuring the secure enclave of the content policy trusted execution environment.
Example 71 includes the subject matter of any of Examples 64-70, and further comprising means for establishing the key policy trusted execution environment using a manageability engine of the computing device.
Example 72 includes the subject matter of any of Examples 64-71, and further comprising means for extracting, by the content policy trusted execution environment, the encrypted key access policy and the encrypted content key from the secure package; and means for requesting, by the content policy trusted execution environment, release of the content key from the key policy trusted execution environment of the computing device.
Example 73 includes the subject matter of any of Examples 64-72, and wherein the means for requesting release of the content key comprises means for transmitting the request to release the content key from a secure enclave of the computing device comprising the content policy trusted execution environment to a manageability engine of the computing device comprising the key policy trusted execution environment.
Example 74 includes the subject matter of any of Examples 64-73, and wherein the means for requesting release of the content key comprises means for transmitting a proof of trust from the content policy trusted execution environment to the key policy trusted execution environment.
Example 75 includes the subject matter of any of Examples 64-74, and wherein the means for transmitting the proof of trust comprises means for transmitting a measurement of a secure enclave comprising the content policy trusted execution environment.
Example 76 includes the subject matter of any of Examples 64-75, and further comprising means for verifying, by the key policy trusted execution environment, that the content policy trusted execution environment is authentic; wherein the means for decrypting the key access policy comprises means for decrypting the key access policy in response to verifying that the content policy trusted execution environment is authentic.
Example 77 includes the subject matter of any of Examples 64-76, and wherein the means for verifying that the content policy trusted execution environment is authentic comprises means for verifying a measurement of a secure enclave comprising the content policy trusted execution environment.
Example 78 includes the subject matter of any of Examples 64-77, and wherein the means for determining whether to decrypt the content key based on the key access policy comprises means for authenticating a user using a protected input path of the key policy trusted execution environment.
Example 79 includes the subject matter of any of Examples 64-78, and further comprising means for decrypting, by the key policy trusted execution environment of the computing device, the content key using the master wrapping key in response to determining to decrypt the content key.
Example 80 includes the subject matter of any of Examples 64-79, and wherein the means for executing the policy enforcement engine comprises means for evaluating at least one content access policy rule of the content access policy selected from a content expiration date rule, a content access number limitation rule, a geographic limitation rule, a security classification rule, or an organizational role rule.
Example 81 includes the subject matter of any of Examples 64-80, and further comprising means for transmitting, by the content policy trusted execution environment, the content via a secure I/O path for presentation to a user.
Example 82 includes the subject matter of any of Examples 64-81, and wherein the means for transmitting the content via the secure I/O path comprises means for transmitting the content via a protected audio video path of the computing device.
Example 83 includes a computing device for authoring secure content, the computing device comprising means for encrypting, by a content policy trusted execution environment, each of (i) content and (ii) a content access policy using a content key; means for encrypting, by a key policy trusted execution environment, each of (i) the content key and (ii) a key access policy using a master wrapping key; and means for generating, by the key policy trusted execution environment, a secure package including the encrypted content, the encrypted content access policy, the encrypted content key, the encrypted key access policy, and a policy enforcement engine.
Example 84 includes the subject matter of Example 83, and wherein the master wrapping key is protected by the key policy trusted execution environment.
Example 85 includes the subject matter of any of Examples 83 and 84, and further comprising means for initializing the content policy trusted execution environment.
Example 86 includes the subject matter of any of Examples 83-85, and wherein the means for initializing the content policy trusted execution environment comprises means for loading a secure enclave using secure enclave support of a processor of the computing device.
Example 87 includes the subject matter of any of Examples 83-86, and further comprising means for establishing the key policy trusted execution environment using a manageability engine of the computing device.
Example 88 includes the subject matter of any of Examples 83-87, and further comprising means for requesting, by the content policy trusted execution environment, creation of the secure package by the key policy trusted execution environment.
Example 89 includes the subject matter of any of Examples 83-88, and wherein the means for requesting creation of the secure package comprises means for transmitting the request to create the secure package from a secure enclave of the computing device comprising the content policy trusted execution environment to a manageability engine of the computing device comprising the key policy trusted execution environment.
Example 90 includes the subject matter of any of Examples 83-89, and further comprising means for generating the content access policy by the content policy trusted execution environment.
Example 91 includes the subject matter of any of Examples 83-90, and wherein the means for generating the content access policy comprises means for modifying an enterprise policy template.
Example 92 includes the subject matter of any of Examples 83-91, and further comprising means for generating the key access policy by the key policy trusted execution environment.
Example 93 includes the subject matter of any of Examples 83-92, and wherein the means for generating the key access policy comprises means for modifying an enterprise policy template.

## Claims

1. A computing device for accessing encrypted content, the computing device comprising:
a content access module to receive a secure package, wherein the secure package includes content, a content access policy, a content key, a key access policy, and a policy enforcement engine, wherein each of the content and the content access policy is encrypted by the content key and wherein each of the content key and the key access policy is encrypted by a master wrapping key;
a key policy trusted execution environment to establish a key policy module, the key policy module to: (i) decrypt the key access policy using the master wrapping key and (ii) determine whether to decrypt the content key based on the key access policy; and
a content policy trusted execution environment to establish a content policy module, the content policy module to: (i) decrypt the content access policy using the content key in response to a determination, by the key policy module, to decrypt the content key, (ii) execute the policy enforcement engine to determine whether to decrypt the content based on the content access policy, and (iii) decrypt the content using the content key in response to a determination, by the policy enforcement engine, to decrypt the content.

2. The computing device of claim 1, wherein the master wrapping key is protected by the key policy trusted execution environment.

3. The computing device of claim 1, wherein the content access module is further to execute the secure package in response to receipt of the secure package, wherein to execute the secure package comprises to execute the secure package by a plugin of a content application of the computing device.

4. The computing device of claim 1, further comprising a processor having secure enclave support; wherein:
the content access module is further to initialize the content policy trusted execution environment in response to receipt of the secure package; and
to initialize the content policy trusted execution environment comprises to load a secure enclave using the secure enclave support of the processor.

5. The computing device of claim 1, further comprising a manageability engine to establish the key policy trusted execution environment.

6. The computing device of claim 1, further comprising:
a secure enclave to establish the content policy trusted execution environment;
and
a manageability engine to establish the key policy trusted execution environment;
wherein the content policy trusted execution environment is further to establish a key request module to:
extract the encrypted key access policy and the encrypted content key from the secure package; and
request release of the content key from the key policy trusted execution environment of the computing device, wherein to request release of the content key comprises to transmit a proof of trust from the content policy trusted execution environment to the key policy trusted execution environment.

7. The computing device of claim 1, wherein:
the key policy module is further to verify that the content policy trusted execution environment is authentic; and
to decrypt the key access policy comprises to decrypt the key access policy in response to a verification that the content policy trusted execution environment is authentic.

8. The computing device of claim 7, further comprising a secure enclave to establish the content policy trusted execution environment, wherein to verify that the content policy trusted execution environment is authentic comprises to verify a measurement of the secure enclave.

9. The computing device of claim 1, wherein to execute the policy enforcement engine comprises to evaluate at least one content access policy rule of the content access policy selected from a content expiration date rule, a content access number limitation rule, a geographic limitation rule, a security classification rule, or an organizational role rule.

10. A method for accessing encrypted content, the method comprising:
receiving, by a computing device, a secure package including: content, a content access policy, a content key, a key access policy, and a policy enforcement engine, wherein each of the content and the content access policy is encrypted by the content key and wherein each of the content key and the key access policy is encrypted by a master wrapping key;
decrypting, by a key policy trusted execution environment of the computing device, the key access policy using the master wrapping key;
determining, by the key policy trusted execution environment, whether to decrypt the content key based on the key access policy;
decrypting, by a content policy trusted execution environment of the computing device, the content access policy using the content key in response to determining to decrypt the content key;
executing, by the content policy trusted execution environment, the policy enforcement engine to determine whether to decrypt the content based on the content access policy; and
decrypting, by the content policy trusted execution environment, the content using the content key in response to determining to decrypt the content.

11. The method of claim 10, wherein the master wrapping key is protected by the key policy trusted execution environment.

12. The method of claim 10, further comprising initializing, by the computing device, the content policy trusted execution environment in response to receiving the secure package, wherein initializing the content policy trusted execution environment comprises loading a secure enclave using secure enclave support of a processor of the computing device.

13. The method of claim 10, further comprising:
extracting, by the content policy trusted execution environment of the computing device, the encrypted key access policy and the encrypted content key from the secure package; and
requesting, by the content policy trusted execution environment of the computing device, release of the content key from the key policy trusted execution environment of the computing device, wherein requesting release of the content key comprises transmitting a proof of trust from the content policy trusted execution environment to the key policy trusted execution environment.

14. The method of claim 10, wherein executing the policy enforcement engine comprises evaluating at least one content access policy rule of the content access policy selected from a content expiration date rule, a content access number limitation rule, a geographic limitation rule, a security classification rule, or an organizational role rule.

15. One or more machine readable storage media comprising a plurality of instructions stored thereon that in response to being executed result in a computing device performing the method of any of claims 10-14.

## Patentansprüche

1. Eine Computervorrichtung zum Zugriff auf verschlüsselte Inhalte, wobei die Computervorrichtung aufweist:
ein Inhaltszugriffsmodul um ein sicheres Paket zu empfangen, wobei das sichere Paket: Inhalt, eine Inhaltszugriffsrichtlinie, einen Inhaltsschlüssel, eine Schlüsselzugriffsrichtlinie und eine Richtliniendurchsetzungsengine beinhaltet,
wobei jeder der Inhalte und die Inhaltszugriffsrichtlinie durch den Inhaltsschlüssel verschlüsselt ist und wobei jeder der Inhaltsschlüssel und die Schlüsselzugriffsrichtlinie durch einen Master-Wrapping-Schlüssel verschlüsselt ist;
eine Schlüsselrichtlinie vertraute Ausführungsumgebung, um ein Schlüsselrichtlinienmodul zu etablieren, das Schlüsselrichtlinienmodul:
(i) Entschlüsseln der Schlüsselzugriffsrichtlinie mit dem Master-Wrapping-Schlüssel
und
(ii) Bestimmen, ob der Inhaltsschlüssel basierend auf der Schlüsselzugriffsrichtlinie entschlüsselt werden soll; und eine Inhaltsrichtlinien vertraute Ausführungsumgebung, um ein Inhaltsrichtlinienmodul zu erstellen, das Inhaltsrichtlinienmodul zum:
(i) Entschlüsseln der Inhaltszugriffsrichtlinie unter Verwendung des Inhaltsschlüssels in Abhängigkeit einer Bestimmung durch das Schlüsselrichtlinienmoduls, den Inhaltsschlüssel zu entschlüsseln,
(ii) Ausführen der Richtliniendurchsetzungsengine, um festzustellen, ob der Inhalt basierend auf der Inhaltszugangsrichtlinie entschlüsselt werden soll, und
(iii) Entschlüsseln des Inhalts unter Verwendung des Inhaltsschlüssels in Abhängigkeit einer Bestimmung durch die Richtliniendurchsetzungsengine zum Entschlüsseln des Inhalts.

2. Computervorrichtung nach Anspruch 1, wobei der Master-Wrapping-Schlüssel durch die Schlüsselrichtlinien vertraute Ausführungsumgebung geschützt ist.

3. Computervorrichtung nach Anspruch 1, wobei das Inhaltszugriffsmodul ferner dazu dient, das sichere Paket in Abhängigkeit eines Empfangs des sicheren Pakets auszuführen, wobei das Ausführen des sicheren Pakets aufweist, das sichere Paket mittels eines Plugins einer Inhaltsanwendung der Computervorrichtung auszuführen.

4. Computervorrichtung nach Anspruch 1, ferner aufweisend einen Prozessor mit sicherer Enclave-Unterstützung; wobei:
das Inhaltszugriffsmodul ferner dazu dient, die Inhaltsrichtlinien vertraute Ausführungsumgebung als Reaktion auf den Empfang des sicheren Pakets zu initialisieren; und
um die Inhaltsrichtlinie vertrauten Ausführungsumgebung zu initialisieren, weist das Laden einer sicheren Enclave unter Verwendung der sicheren Enclaveunterstützung des Prozessors auf

5. Computervorrichtung nach Anspruch 1, ferner aufweisend eine Verwaltungsengine zum Aufbau der Schlüsselrichtlinien vertrauten Ausführungsumgebung.

6. Computervorrichtung nach Anspruch 1, ferner aufweisend:
eine sichere Enclave zur Einrichtung der Inhaltsrichtlinien vertrauten Ausführungsumgebung; und
eine Verwaltungsengine, um die Schlüsselrichtlinien vertraute Ausführungsumgebung zu etablieren;
wobei die Inhaltsrichtlinien vertraute Ausführungsumgebung ferner dazu dient, ein Schlüsselanforderungsmodul zu etablieren:
Extrahieren der verschlüsselten Schlüsselzugangsrichtlinie und des verschlüsselten Inhaltsschlüssels aus dem sicheren Paket; und
Anfordern der Freigabe des Inhaltsschlüssels aus der Schlüsselrichtlinie vertrauten Ausführungsumgebung der Computervorrichtung, wobei das Anfordern der Freigabe des Inhaltsschlüssels ein Übertragen eines Vertrauensnachweises aus der Inhaltsrichtlinie vertrauten Ausführungsumgebung an die Schlüsselrichtlinie vertrauten Ausführungsumgebung aufweist.

7. Computervorrichtung nach Anspruch 1, wobei:
das Schlüsselrichtlinienmodul ferner dazu dient zu überprüfen, ob die Inhaltsrichtlinien vertrauten Ausführungsumgebung authentisch ist; und
zum Entschlüsseln der Schlüsselzugriffsrichtlinie aufweist das Entschlüsseln der Schlüsselzugriffsrichtlinie in Abhängigkeit von einer Überprüfung, dass die Inhaltsrichtlinie vertraute Ausführungsumgebung authentisch ist.

8. Computervorrichtung nach Anspruch 7, ferner aufweisend eine sichere Enclave zum Aufbau der Inhaltsrichtlinien vertrauten Ausführungsumgebung, wobei zum Überprüfen, dass die Inhaltsrichtlinien vertrauten Ausführungsumgebung authentisch sind, das Überprüfen eine Vermessung der sicheren Enclave aufweist.

9. Computervorrichtung nach Anspruch 1, wobei zum Ausführen der Richtliniendurchsetzungsengine das Bewerten mindestens einer Inhaltszugriffsrichtlinie der Inhaltszugriffsrichtlinie aufweist, ausgewählt aus einer Inhaltsverfallsdatumregel, einer Inhaltszugriffsnummernbegrenzungsregel, einer geografischen Begrenzungsregel, einer Sicherheitsklassifizierungsregel oder einer Organisationsrollenregel.

10. Verfahren zum Zugriff auf verschlüsselte Inhalte, wobei das Verfahren aufweist:
Empfangen, durch eine Computervorrichtung, eines sicheren Pakets, einschließlich:
Inhalt, eine Inhaltszugriffsrichtlinie, einen Inhaltsschlüssel, eine Schlüsselzugriffsrichtlinie und eine Richtliniendurchsetzungsengine, wobei jeder der Inhalte und die Inhaltszugriffsrichtlinie durch den Inhaltsschlüssel verschlüsselt ist und wobei jeder der Inhaltsschlüssel und die Schlüsselzugriffsrichtlinie durch einen Master-Wrapping-Schlüssel verschlüsselt ist;
Entschlüsseln, durch die Schlüsselzugriffsrichtlinie vertraute Ausführungsumgebung der Computervorrichtung, die Schlüsselzugangsrichtlinie verwendet den Master-Wrapping-Schlüssel;
Bestimmen, ob der Inhaltsschlüssel basierend auf der Schlüsselzugriffsrichtlinie durch die Schlüsselrichtlinie vertraute Ausführungsumgebung entschlüsselt werden soll;
Entschlüsseln, durch eine Inhaltsrichtlinie vertraute Ausführungsumgebung der Computervorrichtung, der Inhaltszugriffsrichtlinie unter Verwendung des Inhaltsschlüssels in Abhängigkeit des Bestimmens, den Inhaltsschlüssel zu entschlüsseln;
Ausführen durch die Inhaltsrichtlinie vertraute Ausführungsumgebung der Richtliniendurchsetzungsengine, um zu bestimmen, ob der Inhalt basierend auf der Inhaltszugriffsrichtlinie entschlüsselt werden soll; und
Entschlüsseln, durch die Inhaltsrichtlinie vertraute Ausführungsumgebung, des Inhalts unter Verwendung des Inhaltsschlüssels in Abhängigkeit des Bestimmens, den Inhalt zu entschlüsseln.

11. Verfahren nach Anspruch 10, wobei der Master-Wrapping-Schlüssel durch die Schlüsselrichtlinien vertraute Ausführungsumgebung geschützt ist.

12. Verfahren nach Anspruch 10, ferner umfassend das Initialisieren durch die Computervorrichtung der Inhaltsrichtlinien vertrauten Ausführungsumgebung in Abhängigkeit des Empfangens des sicheren Pakets, wobei das Initialisieren der Inhaltsrichtlinien vertrauten Ausführungsumgebung das Laden einer sicheren Enclave unter Verwendung der sicheren Enclaveunterstützung eines Prozessors der Computervorrichtung aufweist.

13. Verfahren nach Anspruch 10, ferner umfassend:
Extrahieren, durch die Inhaltsrichtlinie vertraute Ausführungsumgebung der Computervorrichtung für die der Zugriffsrichtlinie für verschlüsselte Schlüssel und des verschlüsselten Inhaltsschlüssels aus dem Sicherheitspaket; und
Anfordern, durch die Inhaltsrichtlinien vertraute Ausführungsumgebung der Computervorrichtung, der Freigabe des Inhaltsschlüssels aus der Schlüsselrichtlinien vertrauten Ausführungsumgebung der Computervorrichtung, wobei das Anfordern der Freigabe des Inhaltsschlüssels die Übertragung eines Vertrauensnachweises von der Inhaltsrichtlinien vertrauten Ausführungsumgebung an die Schlüsselrichtlinien vertrauten Ausführungsumgebung aufweist.

14. Verfahren nach Anspruch 10, wobei das Ausführen der Richtliniendurchsetzungsengine das Bewerten mindestens einer Inhaltszugriffsrichtlinie der Inhaltszugriffsrichtlinie aufweist, ausgewählt aus einer Inhaltsverfallsdatumregel, einer Inhaltszugriffsnummernbegrenzungsregel, einer geografischen Begrenzungsregel, einer Sicherheitsklassifikationsregel oder einer organisatorischen Rollenregel.

15. Ein oder mehrere maschinenlesbare Speichermedien, die eine Vielzahl von darauf gespeicherten Anweisungen aufweisen, die in Abhängigkeit auf die Ausführung dazu führen, dass eine Computervorrichtung das Verfahren nach einem der Ansprüche 10-14 durchführt.

## Revendications

1. Un dispositif informatique pour accéder à un contenu crypté, le dispositif informatique comprenant :
un module d'accès au contenu destiné à recevoir un paquet sécurisé, le paquet sécurisé comprenant un contenu, une politique d'accès au contenu, une clé de contenu, une politique d'accès de clé et un moteur d'application de politique, chacun parmi le contenu et la politique d'accès au contenu étant crypté par la clé de contenu et chacune parmi la clé de contenu et la politique d'accès de clé étant cryptée par une clé maîtresse d'enveloppement ;
un environnement d'exécution de confiance de la politique de clé pour établir un module de politique de clé, le module de politique de clé étant prévu pour :
(i) décrypter la politique d'accès de clé en utilisant la clé maîtresse d'enveloppement et (ii) déterminer s'il y a lieu de décrypter la clé de contenu en fonction de la politique d'accès de clé ; et
un environnement d'exécution de confiance de la politique de contenu pour établir un module de politique de contenu, le module de politique de contenu étant prévu pour : (i) décrypter la politique d'accès au contenu en utilisant la clé de contenu en réponse à une détermination, par le module de politique de clé, du fait de décrypter la clé de contenu, (ii) exécuter le moteur d'application de politique pour déterminer s'il y a lieu de décrypter le contenu en fonction de la politique d'accès au contenu, et (iii) décrypter le contenu en utilisant la clé de contenu en réponse à une détermination, par le moteur d'application de politique, du fait de décrypter le contenu.

2. Le dispositif informatique selon la revendication 1, dans lequel la clé maîtresse d'enveloppement est protégée par l'environnement d'exécution de confiance de la politique de clé.

3. Le dispositif informatique selon la revendication 1, dans lequel le module d'accès au contenu est en outre destiné à exécuter le paquet sécurisé en réponse à la réception du paquet sécurisé, le fait d'exécuter le paquet sécurisé comprenant le fait d'exécuter le paquet sécurisé par un plugin d'une application de contenu du dispositif informatique.

4. Le dispositif informatique selon la revendication 1, comprenant en outre un processeur ayant un support d'enclave sécurisé ; dans lequel :
le module d'accès au contenu est en outre prévu pour initialiser l'environnement d'exécution de confiance de la politique de contenu en réponse à la réception du paquet sécurisé ; et
le fait d'initialiser l'environnement d'exécution de confiance de la politique de contenu comprend le fait de charger une enclave sécurisée en utilisant le support d'enclave sécurisée du processeur.

5. Le dispositif informatique selon la revendication 1, comprenant en outre un moteur apte à la gestion pour établir l'environnement d'exécution de confiance de la politique de clé.

6. Le dispositif informatique selon la revendication 1, comprenant en outre :
une enclave sécurisée pour établir l'environnement d'exécution de confiance de la politique de contenu ; et
un moteur apte à la gestion permettant d'établir l'environnement d'exécution de confiance de la politique de clé ;
l'environnement d'exécution de confiance de la politique de contenu étant en outre prévu pour établir un module de requête de clé pour :
extraire de l'ensemble sécurisé la politique d'accès de clé cryptée et la clé de contenu cryptée ; et
demander la délivrance de la clé de contenu par l'environnement d'exécution de confiance de la politique de clé du dispositif informatique, le fait de demander la délivrance de la clé de contenu comprend le fait de transmettre une preuve de confiance en provenance de l'environnement d'exécution de confiance de la politique de contenu à l'environnement d'exécution de confiance de la politique de clé.

7. Le dispositif informatique selon la revendication 1, dans lequel :
le module de politique de clé est en outre prévu pour vérifier que l'environnement d'exécution de confiance de la politique de contenu est authentique ; et
le fait de décrypter la politique d'accès de clé comprend le fait de décrypter la politique d'accès de clé en réponse à une vérification que l'environnement d'exécution de confiance de la politique de contenu est authentique.

8. Le dispositif informatique selon la revendication 7, comprenant en outre une enclave sécurisée pour établir l'environnement d'exécution de confiance de la politique de contenu, dans lequel le fait de vérifier que l'environnement d'exécution de confiance de la politique de contenu est authentique comprend le fait de vérifier une mesure de l'enclave sécurisée.

9. Le dispositif informatique selon la revendication 1, dans lequel le fait d'exécuter le moteur d'application de politique comprend le fait d'évaluer au moins une règle de politique d'accès au contenu de la politique d'accès au contenu sélectionnée parmi une règle de date d'expiration du contenu, une règle de limitation du nombre d'accès au contenu, une règle de limitation géographique, une règle de classification de sécurité ou une règle de rôle organisationnel.

10. Un procédé d'accès à un contenu crypté, le procédé comprenant :
le fait de recevoir, par un dispositif informatique, un paquet sécurisé comprenant : un contenu, une politique d'accès au contenu, une clé de contenu, une politique d'accès de clé et un moteur d'application de politique, chacun parmi le contenu et la politique d'accès au contenu étant crypté par la clé de contenu et chacune parmi la clé de contenu et la politique d'accès de clé étant cryptée par une clé maîtresse d'enveloppement ;
le fait de décrypter, par un environnement d'exécution de confiance de la politique de clé du dispositif informatique, la politique d'accès de clé en utilisant la clé maîtresse d'enveloppement ;
le fait de déterminer, par l'environnement d'exécution de confiance de la politique de clé, s'il y a lieu de décrypter la clé de contenu en fonction de la politique d'accès de clé ;
le fait de décrypter, par un environnement d'exécution de confiance de la politique de contenu du dispositif informatique, la politique d'accès au contenu en utilisant la clé de contenu en réponse à la détermination qu'il y a lieu de décrypter la clé de contenu ;
le fait d'exécuter, par l'environnement d'exécution de confiance de la politique de contenu, le moteur d'application de politique pour déterminer s'il y a lieu de décrypter le contenu en fonction de la politique d'accès au contenu ; et
le fait de décrypter, par l'environnement d'exécution de confiance de la politique de contenu, le contenu en utilisant la clé de contenu en réponse à la détermination qu'il y a lieu de décrypter le contenu.

11. Le procédé selon la revendication 10, dans lequel la clé maîtresse d'enveloppement est protégée par l'environnement d'exécution de confiance de la politique de clé.

12. Le procédé selon la revendication 10, comprenant en outre le fait d'initialiser, par le dispositif informatique, l'environnement d'exécution de confiance de la politique de contenu en réponse à la réception du paquet sécurisé, le fait d'initialiser l'environnement d'exécution de confiance de la politique de contenu comprenant le fait de charger une enclave sécurisée en utilisant le support d'enclave sécurisé d'un processeur du dispositif informatique.

13. Le procédé selon la revendication 10, comprenant en outre :
le fait d'extraire, par l'environnement d'exécution de confiance de la politique de contenu du dispositif informatique, depuis le paquet sécurisé, la politique d'accès de clé cryptée et la clé de contenu cryptée ; et
le fait de demander, par l'environnement d'exécution de confiance de la politique de contenu du dispositif informatique, la délivrance de la clé de contenu depuis l'environnement d'exécution de confiance de la politique de clé du dispositif informatique, le fait de demander la délivrance de la clé de contenu comprenant le fait de transmettre une preuve de confiance depuis l'environnement d'exécution de confiance de la politique de contenu vers l'environnement d'exécution de confiance de la politique de clé.

14. Le procédé selon la revendication 10, dans lequel le fait d'exécuter le moteur d'application de politique comprend le fait d'évaluer au moins une règle de politique d'accès au contenu de la politique d'accès au contenu sélectionnée parmi une règle de date d'expiration de contenu, une règle de limitation de nombre d'accès au contenu, une règle de limitation géographique, une règle de classification de sécurité ou une règle de rôle organisationnel.

15. Un ou plusieurs supports de stockage lisibles par machine comprenant une pluralité d'instructions stockées sur eux, qui, en réponse à leur exécution, amènent un dispositif informatique à mettre en oeuvre le procédé selon l'une quelconque des revendications 10 à 14.
